# EUROPEAN PATENT APPLICATION

(11) **EP 3 148 280 A1**
(43) Date of publication of application: **29.03.2017**
(21) Application number: 14895407.6
(22) Date of filing: 17.06.2014
(51) Int. Cl.: H04W 74/00, H04W 76/00

(54) **COMMUNICATION METHOD AND DEVICE**

(71) Applicant: Huawei Technologies Co., Ltd., Longgang District Shenzhen, Guangdong 518129 (CN)
(72) Inventor: QIAN, Zhongqing, Shenzhen Guangdong 518129 (CN); HE, Jia, Shenzhen Guangdong 518129 (CN); CHENG, Jingjing, Shenzhen Guangdong 518129 (CN)
(74) Representative: Epping - Hermann - Fischer
(86) International application number: PCT/CN2014/080095
(87) International publication number: WO 2015/192318

(57) **Abstract**

Embodiments of the present invention disclose a communication method and a related apparatus, where the method includes: determining a primary communication path to a target transmitter according to a first sounding reference signal SRS when the first SRS is received, where the target transmitter is a transmitter that sends the first SRS; obtaining an identifier of a transmitter that performs communication by using the primary communication path, and determining a secondary communication path of a transmitter indicated by each identifier; and communicating with the transmitter according to the primary communication path and the secondary communication path. According to the present invention, communication between a receiver and a transmitter may be established based on the determined primary communication path and the determined secondary communication path, which effectively improves a system transmission capacity.

## Description

### TECHNICAL FIELD

The present invention relates to the field of communications technologies, and in particular, to a communication method and a communications apparatus.

### BACKGROUND

A current wireless access manner is limited only to traditional cellular band access, where a communication frequency band of the current wireless access manner is below 2.6 GHz, communication is performed between a base station (English full name: Base Station, BS for short) and a mobile station (English full name: Mobile Station, MS for short), between BSs, and between MSs in a broadcast manner, and communication performed in the broadcast manner is characterized by a wide beam and a wide coverage area. A same sector may be considered as one beam, where MSs covered by the beam share bandwidths by occupying different frequencies, and more MSs covered by the beam indicate a less bandwidth occupied by each MS and a smaller capacity of each MS, which severely limits a size of service data transmitted by a user.

With the development of network technologies, human society will certainly usher in a next wave of digital society. For example, a 5G wireless network needs to meet a requirement for a larger and faster capacity increase, which requires allocation of more new spectrums. As a high-frequency technology is widely studied, it is verified that high-frequency communication losses on some channels fall within an acceptable communication range. Therefore, it is possible to increase a data capacity because of a large bandwidth on a high frequency band of 6 GHz to 300 GHz. Because a high frequency band is characterized by a narrow beam and concentrated energy, an energy loss caused by reflection or diffraction, or penetration through some objects is relatively small, and a requirement for signal quality can still be met. High-frequency wireless communications is already an inevitable trend for the development of wireless communications in the future.

In the prior art, only a channel with optimal quality is searched for and used between a BS and an MS, between BSs, and between MSs; although high-frequency communication is implemented only by using one beam, a system transmission capacity is still limited.

### SUMMARY

Embodiments of the present invention provide a communication method and apparatus, which can effectively improve a system transmission capacity to some degree.

According to a first aspect, an embodiment of the present invention provides a communications apparatus, including:
a first determining module, configured to determine a primary communication path to a target transmitter according to a first sounding reference signal SRS when the first SRS is received, where the target transmitter is a transmitter that sends the first SRS;
a second determining module, configured to: obtain an identifier of a transmitter that performs communication by using the primary communication path determined by the first determining module, and determine a secondary communication path of a transmitter indicated by each identifier; and
a communications module, configured to communicate with the transmitter according to the primary communication path determined by the first determining module and the secondary communication path determined by the second determining module.

With reference to the first aspect, in a first possible implementation manner, the first determining module includes:
a direction determining unit, configured to determine an optimal direction of arrival according to a preset determining rule if the first SRS is received, where the first SRS is sent by the target transmitter by using a fully deployed wide beam; and
a beam narrowing unit, configured to: narrow, in the optimal direction of arrival determined by the direction determining unit, the wide beam used by the target transmitter, and determine, as the primary communication path, a communication path on which a narrowed beam is located.

With reference to the first aspect, in a second possible implementation manner, the second determining module includes:
a first path obtaining unit, configured to: obtain identifiers of transmitters that performs communication by using the primary communication path, and determine a secondary communication path of the target transmitter according to a second SRS that is sent by the target transmitter corresponding to a target identifier in the identifiers, where the target identifier is an identifier of the target transmitter; and
a second path obtaining unit, configured to determine a secondary communication path of a transmitter indicated by another identifier in the identifiers.

With reference to the second possible implementation manner of the first aspect, in a third possible implementation manner, the first path obtaining unit includes:
a judging subunit, configured to: receive the second SRS that is sent by the target transmitter in a target direction by using a fully deployed narrow beam, obtain channel quality in the target direction by means of calculation according to the second SRS, and determine whether the channel quality is higher than channel quality corresponding to a previously determined secondary communication path; and
an updating subunit, configured to update a communication path corresponding to the target direction to a secondary communication path if a determining result of the judging subunit is that the channel quality is higher than the channel quality corresponding to the previously determined secondary communication path.

With reference to the third possible implementation manner of the first aspect, in a fourth possible implementation manner, the updating subunit is specifically configured to:
if the determining result of the judging subunit is that the channel quality is higher than the channel quality corresponding to the previously determined secondary communication path, determine whether the communication path corresponding to the target direction is the primary communication path; if a determining result is that the communication path corresponding to the target direction is not the primary communication path, detect whether the channel quality of the communication path corresponding to the target direction is higher than a preset communication quality of service QoS threshold; and update the communication path corresponding to the target direction to the secondary communication path when the channel quality of the communication path corresponding to the target direction is higher than the QoS threshold.

With reference to the first aspect, in a fifth possible implementation manner, the communications module includes:
a first transmission unit, configured to: if there are at least two identifiers of transmitters that perform communication by using the primary communication path, and a transmitter indicated by each identifier has a secondary communication path, control the primary communication path to be used to transmit uplink subframes of the transmitters indicated by the identifiers, where the uplink subframes of the transmitters are transmitted in a frequency division multiplexing manner; and
a second transmission unit, configured to control the secondary communication path to be used to transmit a downlink subframe of a corresponding transmitter, where downlink subframes of the transmitters are transmitted in a spatial multiplexing manner, the downlink subframes of the transmitters exclusively occupy fully deployed bandwidth resources, and the uplink subframes and the downlink subframes of the transmitters are different in format.

With reference to the first aspect, in a sixth possible implementation manner, the communications module includes:
a third transmission unit, configured to: if there are at least two identifiers of transmitters that perform communication by using the primary communication path, and a transmitter indicated by each identifier has a secondary communication path, control the primary communication path to be used to transmit downlink subframes of the transmitters indicated by the identifiers, where the downlink subframes of the transmitters are transmitted in a frequency division multiplexing manner; and
a fourth transmission unit, configured to control the secondary communication path to be used to transmit an uplink subframe of a corresponding transmitter, where uplink subframes of the transmitters are transmitted in a spatial multiplexing manner, the uplink subframes of the transmitters exclusively occupy fully deployed bandwidth resources, and the uplink subframes and the downlink subframes of the transmitters are different in format.

With reference to the first aspect, in a seventh possible implementation manner, the communications module includes:
a fifth transmission unit, configured to: if there is one identifier of a transmitter that performs communication by using the primary communication path, and the transmitter indicated by the identifier has a corresponding secondary communication path, control the primary communication path to be used to transmit an uplink subframe of the transmitter, and control the secondary communication path to be used to transmit a downlink subframe of the transmitter; or
a sixth transmission unit, configured to: control the primary communication path to be used to transmit a downlink subframe of the transmitter, and control the secondary communication path to be used to transmit an uplink subframe of the transmitter, where
the uplink subframe and the downlink subframe of the transmitter are transmitted in a spatial multiplexing manner, the uplink subframe and the downlink subframe are different in format, and the transmitter occupies fully deployed bandwidth resources.

With reference to the first aspect, in an eighth possible implementation manner, the communications module includes:
a seventh transmission unit, configured to: if there are at least two identifiers of transmitters that perform communication by using the primary communication path, a quantity of secondary communication paths is greater than zero, and the quantity of secondary communication paths is less than a quantity of the identifiers, control the primary communication path to be used to transmit uplink subframes of the transmitters indicated by the identifiers, where the uplink subframes of the transmitters are transmitted in a frequency division multiplexing manner, and the transmitters include at least one first transmitter that does not have a secondary communication path and a second transmitter that has a secondary communication path;
an eighth transmission unit, configured to control the primary communication path to be used to transmit a downlink subframe of each first transmitter, where the downlink subframe of each first transmitter is transmitted in a frequency division multiplexing manner, and uplink and downlink subframes of the first transmitter are transmitted in a time division multiplexing manner; and
a ninth transmission unit, configured to control the secondary communication path to be used to transmit a downlink subframe of the second transmitter, where the downlink subframe of the second transmitter is transmitted in a spatial multiplexing manner, and an uplink subframe and the downlink subframe of the second transmitter are different in format.

With reference to the first aspect, in a ninth possible implementation manner, the communications module includes:
a tenth transmission unit, configured to: if there are at least two identifiers of transmitters that perform communication by using the primary communication path, a quantity of secondary communication paths is greater than zero, and the quantity of secondary communication paths is less than a quantity of the identifiers, control the primary communication path to be used to transmit downlink subframes of the transmitters indicated by the identifiers, where the downlink subframes of the transmitters are transmitted in a frequency division multiplexing manner, and the transmitters include at least one first transmitter that does not have a secondary communication path and a second transmitter that has a secondary communication path;
an eleventh transmission unit, configured to control the primary communication path to be used to transmit an uplink subframe of each first transmitter, where the uplink subframe of each first transmitter is transmitted in a frequency division multiplexing manner, and uplink and downlink subframes of the first transmitter are transmitted in a time division multiplexing manner; and
a twelfth transmission unit, configured to control the secondary communication path to be used to transmit an uplink subframe of the second transmitter, where the uplink subframe of the second transmitter is transmitted in a spatial multiplexing manner, and the uplink subframe and a downlink subframe of the second transmitter are different in format.

With reference to the fifth possible implementation manner of the first aspect, or the sixth possible implementation manner of the first aspect, or the seventh possible implementation manner of the first aspect, or the eighth possible implementation manner of the first aspect, or the ninth possible implementation manner of the first aspect, in a tenth possible implementation manner, the communications apparatus further includes:
an insertion module, configured to insert a third SRS into the uplink and downlink subframes according to a preset insertion spacing, where
the insertion module is specifically configured to:
   directly insert the third SRS into a uplink subframe or wrap the third SRS in a special subframe and insert the special subframe into the uplink subframe; and wrap the third SRS in a special subframe and insert the special subframe into the downlink subframe or at a switching location of the downlink subframe and the uplink subframe.

According to a second aspect, an embodiment of the present invention further provides a communication method, including:
determining a primary communication path to a target transmitter according to a first sounding reference signal SRS when the first SRS is received, where the target transmitter is a transmitter that sends the first SRS;
obtaining an identifier of a transmitter that performs communication by using the primary communication path, and determining a secondary communication path of a transmitter indicated by each identifier; and
communicating with the transmitter according to the primary communication path and the secondary communication path.

With reference to the second aspect, in a first possible implementation manner, the determining a primary communication path to a target transmitter according to a first SRS when the first SRS is received includes:
determining an optimal direction of arrival according to a preset determining rule if the first SRS is received, where the first SRS is sent by the target transmitter by using a fully deployed wide beam; and
narrowing, in the optimal direction of arrival, the wide beam used by the target transmitter, and determining, as the primary communication path, a communication path on which a narrowed beam is located.

With reference to the second aspect, in a second possible implementation manner, the obtaining an identifier of a transmitter that performs communication by using the primary communication path, and determining a secondary communication path of a transmitter indicated by each identifier includes:
obtaining identifiers of transmitters that performs communication by using the primary communication path, and determining a secondary communication path of the target transmitter according to a second SRS that is sent by the target transmitter corresponding to a target identifier in the identifiers, where the target identifier is an identifier of the target transmitter; and
determining a secondary communication path of a transmitter indicated by another identifier in the identifiers.

With reference to the second possible implementation manner of the second aspect, in a third possible implementation manner, the obtaining identifiers of transmitters that performs communication by using the primary communication path, and determining a secondary communication path of the target transmitter according to a second SRS that is sent by the target transmitter corresponding to a target identifier in the identifiers includes:
receiving the second SRS that is sent by the target transmitter in a target direction by using a fully deployed narrow beam;
obtaining channel quality in the target direction by means of calculation according to the second SRS;
determining whether the channel quality is higher than channel quality corresponding to a previously determined secondary communication path; and
updating a communication path corresponding to the target direction to a secondary communication path if the channel quality is higher than the channel quality corresponding to the previously determined secondary communication path.

With reference to the third possible implementation manner of the second aspect, in a fourth possible implementation manner, the communication method further includes:
receiving a second SRS that is sent, in a corresponding direction obtained after a beam direction changes, by the target transmitter by using a fully deployed narrow beam, using the second SRS sent in the direction as the second SRS that is sent by the target transmitter in the target direction, and repeatedly executing the step of obtaining channel quality in the target direction by means of calculation according to the second SRS until detection on second SRSs that are sent by the target transmitter in all directions is completed.

With reference to the third possible implementation manner of the second aspect, in a fifth possible implementation manner, the updating a communication path corresponding to the target direction to a secondary communication path includes:
determining whether the communication path corresponding to the target direction is the primary communication path;
if a determining result is that the communication path corresponding to the target direction is not the primary communication path, detecting whether the channel quality of the communication path corresponding to the target direction is higher than a preset communication quality of service QoS threshold; and
updating the communication path corresponding to the target direction to the secondary communication path if the channel quality of the communication path corresponding to the target direction is higher than the QoS threshold.

With reference to the second aspect, in a sixth possible implementation manner, the communicating with the transmitter according to the primary communication path and the secondary communication path includes:
if there are at least two identifiers of transmitters that perform communication by using the primary communication path, and a transmitter indicated by each identifier has a secondary communication path, controlling the primary communication path to be used to transmit uplink subframes of the transmitters indicated by the identifiers, where the uplink subframes of the transmitters are transmitted in a frequency division multiplexing manner; and
controlling the secondary communication path to be used to transmit a downlink subframe of a corresponding transmitter, where downlink subframes of the transmitters are transmitted in a spatial multiplexing manner, the downlink subframes of the transmitters exclusively occupy fully deployed bandwidth resources, and the uplink subframes and the downlink subframes of the transmitters are different in format.

With reference to the second aspect, in a seventh possible implementation manner, the communicating with the transmitter according to the primary communication path and the secondary communication path includes:
if there are at least two identifiers of transmitters that perform communication by using the primary communication path, and a transmitter indicated by each identifier has a secondary communication path, controlling the primary communication path to be used to transmit downlink subframes of the transmitters indicated by the identifiers, where the downlink subframes of the transmitters are transmitted in a frequency division multiplexing manner; and
controlling the secondary communication path to be used to transmit an uplink subframe of a corresponding transmitter, where uplink subframes of the transmitters are transmitted in a spatial multiplexing manner, the uplink subframes of the transmitters exclusively occupy fully deployed bandwidth resources, and the uplink subframes and the downlink subframes of the transmitters are different in format.

With reference to the second aspect, in an eighth possible implementation manner, the communicating with the transmitter according to the primary communication path and the secondary communication path includes:
if there is one identifier of a transmitter that performs communication by using the primary communication path, and the transmitter indicated by the identifier has a corresponding secondary communication path, transmitting an uplink subframe and a downlink subframe of the transmitter in a spatial multiplexing manner, where the uplink subframe and the downlink subframe are different in format, and the transmitter occupies fully deployed bandwidth resources.

With reference to the second aspect, in a ninth possible implementation manner, the communicating with the transmitter according to the primary communication path and the secondary communication path includes:
if there are at least two identifiers of transmitters that perform communication by using the primary communication path, a quantity of secondary communication paths is greater than zero, and the quantity of secondary communication paths is less than a quantity of the identifiers, controlling the primary communication path to be used to transmit uplink subframes of the transmitters indicated by the identifiers, where the uplink subframes of the transmitters are transmitted in a frequency division multiplexing manner, and the transmitters include at least one first transmitter that does not have a secondary communication path and a second transmitter that has a secondary communication path;
controlling the primary communication path to be used to transmit a downlink subframe of each first transmitter, where the downlink subframe of each first transmitter is transmitted in a frequency division multiplexing manner, and uplink and downlink subframes of the first transmitter are transmitted in a time division multiplexing manner; and
controlling the secondary communication path to be used to transmit a downlink subframe of the second transmitter, where the downlink subframe of the second transmitter is transmitted in a spatial multiplexing manner, and an uplink subframe and the downlink subframe of the second transmitter are different in format.

With reference to the second aspect, in a tenth possible implementation manner, the communicating with the transmitter according to the primary communication path and the secondary communication path includes:
if there are at least two identifiers of transmitters that perform communication by using the primary communication path, a quantity of secondary communication paths is greater than zero, and the quantity of secondary communication paths is less than a quantity of the identifiers, controlling the primary communication path to be used to transmit downlink subframes of the transmitters indicated by the identifiers, where the downlink subframes of the transmitters are transmitted in a frequency division multiplexing manner, and the transmitters include at least one first transmitter that does not have a secondary communication path and a second transmitter that has a secondary communication path;
controlling the primary communication path to be used to transmit an uplink subframe of each first transmitter, where the uplink subframe of each first transmitter is transmitted in a frequency division multiplexing manner, and uplink and downlink subframes of the first transmitter are transmitted in a time division multiplexing manner; and
controlling the secondary communication path to be used to transmit an uplink subframe of the second transmitter, where the uplink subframe of the second transmitter is transmitted in a spatial multiplexing manner, and the uplink subframe and a downlink subframe of the second transmitter are different in format.

With reference to the sixth possible implementation manner of the second aspect, or the seventh possible implementation manner of the second aspect, or the eighth possible implementation manner of the second aspect, or the ninth possible implementation manner of the second aspect, or the tenth possible implementation manner of the second aspect, in an eleventh possible implementation manner, the communication method further includes:
inserting a third SRS into the uplink and downlink subframes according to a preset insertion spacing, where
the inserting a third SRS into the uplink and downlink subframes includes:
   directly inserting the third SRS into a uplink subframe or wrapping the third SRS in a special subframe and inserting the special subframe into the uplink subframe; and
wrapping the third SRS in a special subframe and inserting the special subframe into the downlink subframe or at a switching location of the downlink subframe and the uplink subframe.

According to a third aspect, an embodiment of the present invention further provides a computer storage medium, where the computer storage medium stores a program, and when the program runs, some or all of steps in the communication method in the foregoing second aspect are executed.

According to a fourth aspect, an embodiment of the present invention further provides a communications device, including the communications apparatus in the foregoing first aspect.

The following beneficial effects are achieved by implementing the embodiments of the present invention:

According to the embodiments of the present invention, a primary communication path for communication between a current transmitter and a target transmitter may be determined according to an SRS signal received by a receiver, and a secondary communication path is determined for each transmitter that performs communication by using the primary communication path, so that communication with each transmitter is performed based on the primary communication path and the secondary communication path, which effectively improves a system transmission capacity.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic structural diagram of a communications apparatus according to an embodiment of the present invention;
FIG. 2 is a schematic structural diagram of another communications apparatus according to an embodiment of the present invention;
FIG. 3 is a schematic interaction diagram of a communication method according to an embodiment of the present invention;
FIG. 4 is a schematic flowchart of a method for determining a secondary communication path according to an embodiment of the present invention;
FIG. 5 is a schematic flowchart of another method for determining a secondary communication path according to an embodiment of the present invention;
FIG. 6 is a schematic diagram of a communication scenario according to an embodiment of the present invention;
FIG. 7 is a schematic diagram of resource allocation in the scenario in FIG. 6;
FIG. 8 is a schematic diagram of a corresponding frame format in the scenario in FIG. 6;
FIG. 9 is a schematic diagram of another communication scenario according to an embodiment of the present invention;
FIG. 10 is a schematic diagram of resource allocation in the scenario in FIG. 9;
FIG. 11 is a schematic diagram of a corresponding frame format in the scenario in FIG. 9;
FIG. 12 is a schematic diagram of still another communication scenario according to an embodiment of the present invention;
FIG. 13 is a schematic diagram of resource allocation in the scenario in FIG. 12;
FIG. 14 is a schematic diagram of a frame format in the scenario in FIG. 12;
FIG. 15 is a schematic diagram of another type of resource allocation in the scenario in FIG. 12;
FIG. 16 is a schematic diagram of another frame format in the scenario in FIG. 12;
FIG. 17 is a schematic diagram of yet another communication scenario according to an embodiment of the present invention;
FIG. 18 is a schematic diagram of resource allocation in the scenario in FIG. 17;
FIG. 19 is a schematic diagram of a corresponding frame format in the scenario in FIG. 17;
FIG. 20 is a schematic diagram of still yet another communication scenario according to an embodiment of the present invention;
FIG. 21 is a schematic diagram of resource allocation in the scenario in FIG. 20;
FIG. 22 is a schematic diagram of a frame format in the scenario in FIG. 20;
FIG. 23 is a schematic diagram of another type of resource allocation in the scenario in FIG. 20;
FIG. 24 is a schematic diagram of another frame format in the scenario in FIG. 20; and
FIG. 25 is a schematic structural diagram of a communications device according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

A receiver in the embodiments of the present invention may refer to a base station (English full name: Base Station, BS for short) or a mobile station (English full name: Mobile Station, MS for short), a transmitter may also be an MS or a BS, and communication in the embodiments of the present invention includes but is not limited to communication between BSs, between a BS and an MS, and between MSs. The MS includes user equipment (English full name: User Equipment, UE for short).

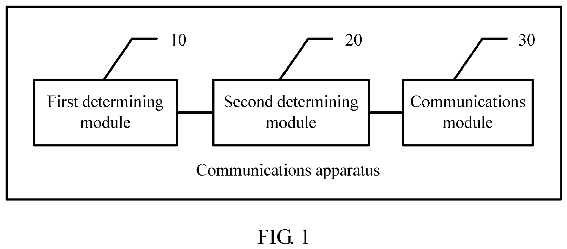

Referring to FIG. 1, FIG. 1 is a schematic structural diagram of a communications apparatus according to an embodiment of the present invention. The apparatus in this embodiment of the present invention may be specifically applied to a communications device that can be used as a receiver, for example, a base station. Specifically, the apparatus may include a first determining module 10, a second determining module 20, and a communications module 30.

The first determining module 10 is configured to determine a primary communication path to a target transmitter according to a first sounding reference signal SRS when the first SRS is received, where the target transmitter is a transmitter that sends the first SRS.

In a specific embodiment, the transmitter, for example, UE, may be connected by using a wide beam to ensure normal communication. A process of connection by using the wide beam is the same as a process of connection by means of traditional wireless cellular communication, and details are not described herein. Specifically, when receiving a sounding reference signal (English full name: Sounding Reference Signal, SRS for short), that is, the first SRS, sent by the target transmitter, for example, the newly connected UE, by using a fully deployed wide beam, the first determining module 10 may be triggered to determine a primary communication path between the UE and a current receiver, that is, a BS.

The primary communication path may refer to a communication path used during connection by means of the traditional wireless cellular communication, that is, a communication path with optimal channel quality. Generally, the primary communication path is a line of sight (English full name: Line of Sight, LoS for short) channel. When there is no LoS channel, or quality of a LoS channel is lower than that of a non-line of sight (English full name: non-Line of Sight, NLoS for short) channel in some extremely special cases, the primary communication path is an NLoS channel.

Optionally, the method in this embodiment of the present invention may be implemented by using a millimeter-wave band as a communication frequency band. A millimeter wave refers to a high frequency band of 30 GHz to 300 GHz, and has relatively strong directivity and a more concentrated narrow beam. Therefore, performing communication by using a millimeter wave can obtain a higher antenna gain. In addition, because a millimeter wave is characterized by concentrated beam energy, an energy loss on a reflection path or a diffraction path is relatively small. Therefore, the millimeter wave can be used for communication.

The second determining module 20 is configured to: obtain an identifier of a transmitter that performs communication by using the primary communication path determined by the first determining module 10, and determine a secondary communication path of a transmitter indicated by each identifier.

After the first determining module 10 determines the primary communication path corresponding to the target UE, the second determining module 20 may obtain an identifier corresponding to UE in a beam on the primary communication path between the UE and the current BS, that is, obtain an identifier of UE that performs communication by using the primary communication path, to determine a secondary communication path for each UE, that is, a communication path with optimal channel quality except the primary communication path.

In a specific embodiment, after the target UE is connected by means of the traditional wireless cellular communication, the BS, that is, the current receiver, corresponding to the target UE may control a wide beam to be divided into narrow beams and users to be partitioned, and further search a respective area for a secondary communication path corresponding to the UE, so as to improve a user capacity and a system capacity. Specifically, the secondary communication path may be an NLoS channel in a general case.

The communications module 30 is configured to communicate with the transmitter according to the primary communication path determined by the first determining module 10 and the secondary communication path determined by the second determining module 20.

In a specific embodiment, the communications module 30 may communicate with the UE in the beam on the primary communication path according to the determined primary communication path and secondary communication path that are corresponding to the UE in the beam on the primary communication path.

By implementing this embodiment of the present invention, a primary communication path for communication between a current transmitter and a target transmitter may be determined according to an SRS signal received by a receiver, and a secondary communication path is determined for each transmitter that performs communication by using the primary communication path, so that communication with each transmitter is performed based on the primary communication path and the secondary communication path, which effectively improves a system transmission capacity.

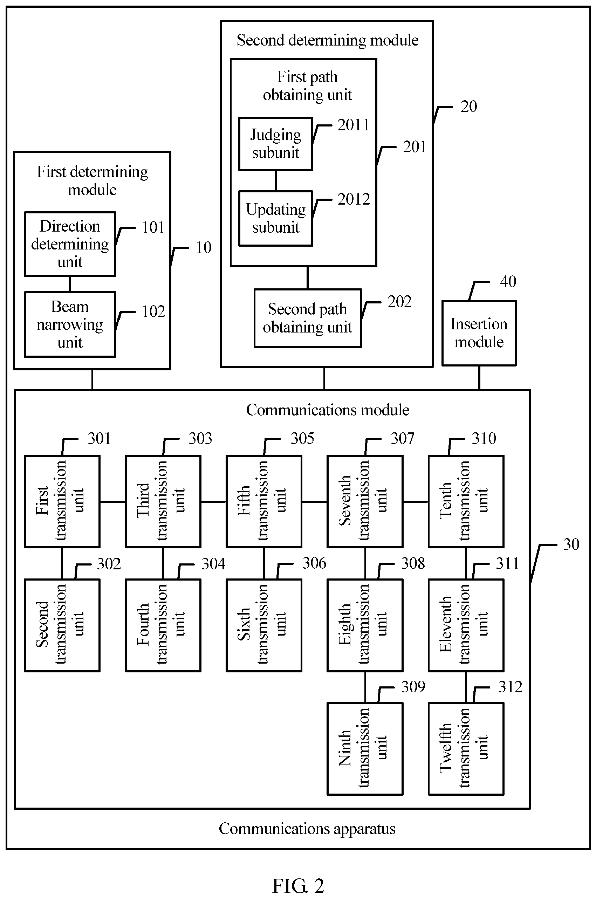

Referring to FIG. 2, FIG. 2 is a schematic structural diagram of another communications apparatus according to an embodiment of the present invention. The apparatus in this embodiment of the present invention includes the first determining module 10, the second determining module 20, and the communications module 30 that are of the foregoing communications apparatus. Further, in this embodiment of the present invention, the first determining module 10 may specifically include: a direction determining unit 101 and a beam narrowing unit 102.

The direction determining unit 101 is configured to determine an optimal direction of arrival according to a preset determining rule if a first SRS is received.

The first SRS is sent by a target transmitter, for example, newly connected UE, by using a fully deployed wide beam.

If the direction determining unit 101 receives an SRS signal sent by the target UE by using the fully deployed wide beam, that is, the first SRS, the direction determining unit 101 may determine, according to the preset determining rule, the optimal direction of arrival from a direction in which the SRS signal is currently received, and feed back location information related to the optimal direction of arrival to the newly connected UE. The preset determining rule may be formed according to a particular algorithm and a particular criterion. For example, the direction determining unit 101 may obtain, according to SRS signals in all directions, signal to interference plus noise ratio (English full name: Signal to Interference plus Noise Ratio, SINR for short) values corresponding to all the directions, and select a direction corresponding to a largest SINR value of the SINR values as the optimal direction of arrival.

The beam narrowing unit 102 is configured to: narrow, in the optimal direction of arrival determined by the direction determining unit 101, the wide beam used by the target transmitter, and determine, as a primary communication path, a communication path on which a narrowed beam is located.

After the direction determining unit 101 determines the optimal direction of arrival, the beam narrowing unit 102 may narrow, in the optimal direction of arrival, the wide beam used by the UE. For example, the beam narrowing unit 102 controls related beam control modules such as a precoding precoding adjustment module and a beamforming beamforming module to narrow the beam in the optimal direction of arrival. Further, after receiving the information that is related to the optimal direction of arrival and fed back by a BS, the UE that sends the SRS signal, that is, the target UE, may control the related beam configuration modules such as the precoding precoding adjustment module and the beamforming beamforming module to narrow the beam in the optimal direction of arrival, so as to obtain the primary communication path between the current BS and the target UE.

Further, in this embodiment of the present invention, the second determining module 20 may include:
a first path obtaining unit 201, configured to: obtain an identifier of a transmitter that performs communication by using the primary communication path, and determine a secondary communication path of the target transmitter according to a second SRS that is sent by the target transmitter corresponding to a target identifier in the identifiers, where the target identifier is an identifier of the target transmitter; and
a second path obtaining unit 202, configured to determine a secondary communication path of a transmitter indicated by another identifier in the identifiers.

The second SRS is an SRS sent by the transmitter by using a fully deployed narrow beam.

After the primary communication path between the current BS and the target UE is obtained by means of determining, the first path obtaining unit 201 may obtain the secondary communication path of the target UE, and the second path obtaining unit 202 may extract a secondary communication path corresponding to another UE sharing the primary communication path, to determine secondary communication paths corresponding to all UEs that perform communication by using the primary communication path, that is, all UEs in a beam on the primary communication path. The another UE sharing the primary communication path is UE that already exists in the beam on the primary communication path, and a secondary communication path between the existing UE and the current BS may be recorded and saved. Further, when determining the secondary communication path of the existing UE, the second path obtaining unit 202 only needs to extract the recoded and saved secondary communication path.

Further, optionally, the first path obtaining unit 201 may include: a judging subunit 2011 and an updating subunit 2012.

The judging subunit 2011 is configured to: receive a second SRS that is sent by the target transmitter in a target direction by using a fully deployed narrow beam, obtain channel quality in the target direction by means of calculation according to the second SRS, and determine whether the channel quality is higher than channel quality corresponding to a previously determined secondary communication path.

If the judging subunit 2011 receives an SRS sent by the target UE by using a fully deployed narrow beam, that is, the second SRS, the judging subunit 2011 may calculate channel quality in a direction at a current moment according to the SRS, and after obtaining the channel quality in the direction at the current moment by means of calculation, compare the channel quality in the direction at the current moment with channel quality obtained by means of calculation at a previous moment, and detect whether the channel quality in the direction at the current moment is higher than the channel quality obtained by means of calculation at the previous moment.

The updating subunit 2012 is configured to update a communication path corresponding to the target direction to a secondary communication path if a determining result of the judging subunit 2011 is that the channel quality is higher than the channel quality corresponding to the previously determined secondary communication path.

The updating subunit 2012 may be specifically configured to:
if the determining result of the judging subunit 2011 is that the channel quality is higher than the channel quality corresponding to the previously determined secondary communication path, determine whether the communication path corresponding to the target direction is the primary communication path; if a determining result is that the communication path corresponding to the target direction is not the primary communication path, detect whether the channel quality of the communication path corresponding to the target direction is higher than a preset communication quality of service QoS threshold; and update the communication path corresponding to the target direction to a secondary communication path when the channel quality of the communication path corresponding to the target direction is higher than the QoS threshold.

If the judging subunit 2011 detects that the channel quality in the target direction, that is, the direction at the current moment, is higher than the channel quality obtained by means of calculation at the previous moment, it indicates that a communication path corresponding to the direction at the current moment may be updated to a secondary communication path between the current BS and the target UE.

Further, before the communication path corresponding to the direction at the current moment is updated to the secondary communication path between the current BS and the target UE, if it is detected that the channel quality in the direction at the current moment is higher than the channel quality obtained by means of calculation at the previous moment, whether the communication path corresponding to the direction at the current moment is the primary communication path between the current BS and the target UE may be further detected. If the communication path corresponding to the direction at the current moment is not the primary communication path, the communication path corresponding to the target direction is updated to the secondary communication path.

Further, if it is detected that the communication path corresponding to the direction at the current moment is not the primary communication path between the current BS and the target UE, whether the channel quality of the communication path corresponding to the direction at the moment is higher than a preset quality of service (English full name: Quality of Service, QoS for short) threshold may be further detected. If it is detected that the channel quality of the communication path corresponding to the direction at the moment is higher than the QoS threshold, the communication path corresponding to the direction at the current moment may be updated to the secondary communication path. The QoS threshold may be set according to a specific channel quality requirement, which is not limited in this embodiment of the present invention.

Specifically, the target UE changes a beam direction according to a preset time interval, uses, as the target direction, a corresponding direction obtained after the beam direction changes, and sends an SRS in the target direction by using a fully deployed narrow beam. The judging subunit 2011 receives the SRS sent by the target UE in the target direction, calculates and determines channel quality in the direction until the first path obtaining unit 201 completes detection on SRSs that are sent by the target UE in all directions, and uses a determined secondary communication path as the secondary communication path between the current BS and the target UE.

Further, optionally, determining the secondary communication path corresponding to the target UE may be: after the BS receives the SRSs that are sent by the UE in all the directions by using fully deployed narrow beams, obtaining channel quality in all the directions by means of calculation and comparison, and directly selecting, as the secondary communication path corresponding to the target UE, a communication path corresponding to a direction with optimal channel quality (which meets the preset QoS threshold) of the channel quality in all the directions except the channel quality in the direction of the primary communication path.

In an optional implementation manner, in this embodiment of the present invention, the communications module 30 may include:
a first transmission unit 301, configured to: if there are at least two identifiers of transmitters that perform communication by using the primary communication path, and a transmitter indicated by each identifier has a secondary communication path, control the primary communication path to be used to transmit uplink subframes of the transmitters indicated by the identifiers, where the uplink subframes of the transmitters are transmitted in a frequency division multiplexing manner; and
a second transmission unit 302, configured to control the secondary communication path to be used to transmit a downlink subframe of a corresponding transmitter, where downlink subframes of the transmitters are transmitted in a spatial multiplexing manner, the downlink subframes of the transmitters exclusively occupy fully deployed bandwidth resources, and the uplink subframes and the downlink subframes of the transmitters are different in format.

Optionally, the communications module 30 may alternatively include:
a third transmission unit 303, configured to: if there are at least two identifiers of transmitters that perform communication by using the primary communication path, and a transmitter indicated by each identifier has a secondary communication path, control the primary communication path to be used to transmit downlink subframes of the transmitters indicated by the identifiers, where the downlink subframes of the transmitters are transmitted in a frequency division multiplexing manner; and
a fourth transmission unit 304, configured to control the secondary communication path to be used to transmit an uplink subframe of a corresponding transmitter, where uplink subframes of the transmitters are transmitted in a spatial multiplexing manner, the uplink subframes of the transmitters exclusively occupy fully deployed bandwidth resources, and the uplink subframes and the downlink subframes of the transmitters are different in format.

When the second determining module 20 determines that there are at least two transmitters, for example, UEs, that perform communication by using the primary communication path, and each UE has a secondary communication path, the communications module 30 may select communication paths separately for transmitting an uplink subframe and a downlink subframe, where link subframes that are of each UE and transmitted by using corresponding secondary communication paths are distinguished in a space division manner.

In an optional implementation manner, the communications module 30 may include:
a fifth transmission unit 305, configured to: if there is one identifier of a transmitter that performs communication by using the primary communication path, and the transmitter indicated by the identifier has a corresponding secondary communication path, control the primary communication path to be used to transmit an uplink subframe of the transmitter, and control the secondary communication path to be used to transmit a downlink subframe of the transmitter; or
a sixth transmission unit 306, configured to: control the primary communication path to be used to transmit a downlink subframe of the transmitter, and control the secondary communication path to be used to transmit an uplink subframe of the transmitter, where
the uplink subframe and the downlink subframe of the transmitter are transmitted in a spatial multiplexing manner, the uplink subframe and the downlink subframe are different in format, and the transmitter occupies fully deployed bandwidth resources.

When the second determining module 20 determines that there is only one UE that performs communication by using the primary communication path, and the UE has a secondary communication path, the communications module 30 may select communication paths respectively for transmitting an uplink subframe and a downlink subframe that are corresponding to the UE. For example, the primary communication path determined by the first determining module 10 may be used to transmit the uplink subframe corresponding to the UE, and the secondary communication path determined by the second determining module 20 may be used to transmit the downlink subframe corresponding to the UE, where the uplink and downlink subframes are distinguished in a space division manner.

In an optional implementation manner, the communications module 30 may include:
a seventh transmission unit 307, configured to: if there are at least two identifiers of transmitters that perform communication by using the primary communication path, a quantity of secondary communication paths is greater than zero, and the quantity of secondary communication paths is less than a quantity of the identifiers, control the primary communication path to be used to transmit uplink subframes of the transmitters indicated by the identifiers, where the uplink subframes of the transmitters are transmitted in a frequency division multiplexing manner, and the transmitters include at least one first transmitter that does not have a secondary communication path and a second transmitter that has a secondary communication path;
an eighth transmission unit 308, configured to control the primary communication path to be used to transmit a downlink subframe of each first transmitter, where the downlink subframe of each first transmitter is transmitted in a frequency division multiplexing manner, and uplink and downlink subframes of the first transmitter are transmitted in a time division multiplexing manner; and
a ninth transmission unit 309, configured to control the secondary communication path to be used to transmit a downlink subframe of the second transmitter, where the downlink subframe of the second transmitter is transmitted in a spatial multiplexing manner, and an uplink subframe and the downlink subframe of the second transmitter are different in format.

Optionally, the communications module 30 may alternatively include:
a tenth transmission unit 310, configured to: if there are at least two identifiers of transmitters that perform communication by using the primary communication path, a quantity of secondary communication paths is greater than zero, and the quantity of secondary communication paths is less than a quantity of the identifiers, control the primary communication path to be used to transmit downlink subframes of the transmitters indicated by the identifiers, where the downlink subframes of the transmitters are transmitted in a frequency division multiplexing manner, and the transmitters include at least one first transmitter that does not have a secondary communication path and a second transmitter that has a secondary communication path;
an eleventh transmission unit 311, configured to control the primary communication path to be used to transmit an uplink subframe of each first transmitter, where the uplink subframe of each first transmitter is transmitted in a frequency division multiplexing manner, and uplink and downlink subframes of the first transmitter are transmitted in a time division multiplexing manner; and
a twelfth transmission unit 312, configured to control the secondary communication path to be used to transmit an uplink subframe of the second transmitter, where the uplink subframe of the second transmitter is transmitted in a spatial multiplexing manner, and the uplink subframe and a downlink subframe of the second transmitter are different in format.

When the second determining module 20 determines that there are at least two UEs that perform communication by using the primary communication path, and a quantity of UEs that have a secondary communication path is greater than zero but is less than a total quantity of UEs, the communications module 30 may select communication paths respectively for transmitting an uplink subframe and a downlink subframe that are corresponding to each UE, where link subframes that are of each UE and transmitted by using corresponding secondary communication paths are distinguished in a space division manner, and link subframes that are of each UE and transmitted by using the primary communication path are distinguished in a time division manner.

Further, in this embodiment of the present invention, the apparatus may further include:
an insertion module 40, configured to insert a third SRS into the uplink and downlink subframes according to a preset insertion spacing.

The insertion module is specifically configured to:
directly insert the third SRS into a uplink subframe or wrap the third SRS in a special subframe and insert the special subframe into the uplink subframe; and wrap the third SRS in a special subframe and insert the special subframe into the downlink subframe or at a switching location of the downlink subframe and the uplink subframe.

The third SRS is obtained by the current BS (that is, the receiver) according to SRS information fed back by corresponding UE.

In a specific embodiment, a frame format may be determined according to the secondary communication path corresponding to the UE in the beam on the primary communication path, and then a communication path for transmitting uplink and downlink subframes is determined, so that communication between the BS and the UE in the beam on the primary communication path is performed.

By implementing this embodiment of the present invention, after determining, according to a received SRS, a primary communication path for communication with UE that sends the SRS, a current BS may further determine a secondary communication path to the UE, extract a secondary communication path of another UE existing in a beam on the primary communication path, and communicate with each UE in the beam on the primary communication path based on a communication scenario that is determined according to the primary communication path and the secondary communication path, which can effectively improve a data transmission throughput and data transmission efficiency of a system.

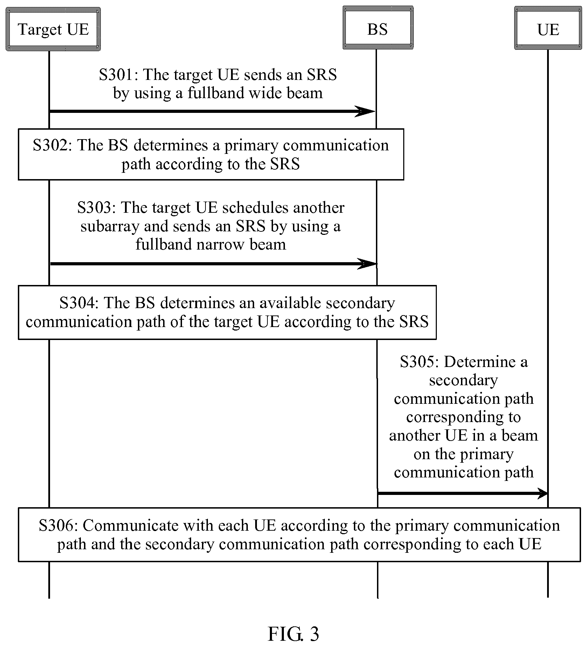

Referring to FIG. 3, FIG. 3 is a schematic interaction diagram of a communication method according to an embodiment of the present invention. This embodiment of the present invention is described by using communication between a BS (that is, a receiver) and UE (that is, a transmitter) as an example. Specifically, the method includes:
S301: Target UE sends an SRS by using a fully deployed wide beam.
S302: A BS determines a primary communication path according to the SRS.
   In a specific embodiment, the UE may be connected by using a wide beam to ensure normal communication. A process of connection by using the wide beam is the same as a process of connection by means of traditional wireless cellular communication. Specifically, when receiving the SRS that is sent by the target UE, for example, newly connected UE, by using the fully deployed wide beam, the current BS may be triggered to determine a primary communication path between the current BS and the UE.
   In an optional implementation manner, in this embodiment of the present invention, when the primary communication path between the BS and the target UE is being determined, an optimal direction of arrival may be determined according to the received SRS, so as to determine the primary communication path. The SRS is sent by the target UE, for example, the newly connected UE by using the fully deployed wide beam.
   Specifically, if the current BS receives the SRS signal that is sent by the target UE by using the fully deployed wide beam, the current BS may determine, according to a preset determining rule, the optimal direction of arrival from a direction in which the SRS signal is currently received, and feed back location information related to the optimal direction of arrival to the newly connected UE. The preset determining rule may be formed according to a particular algorithm and a particular criterion. For example, the BS may obtain, according to SRS signals in all directions, SINR values corresponding to all the directions, and select a direction corresponding to a largest SINR value of the SINR values as the optimal direction of arrival.
   After the optimal direction of arrival is determined, the BS and the UE may narrow, in the optimal direction of arrival, the wide beam used by the UE. For example, the BS and the UE control related beam control modules such as a precoding precoding adjustment module and a beamforming beamforming module to narrow the beam in the optimal direction of arrival, and determine a communication path on which a narrowed beam is located as the primary communication path between the current BS and the target UE.
S303: The target UE schedules another subarray and sends an SRS by using a fully deployed narrow beam.
S304: The BS determines an available secondary communication path of the target UE according to the SRS.
   After the primary communication path of the target UE is determined, an identifier of UE that performs communication by using the primary communication path between the target UE and the current BS, that is, an identifier corresponding to each UE in a beam on the primary communication path, may be obtained, so as to determine a secondary communication path of the UE indicated by each identifier, that is, a communication path with optimal channel quality except the primary communication path.
   In a specific embodiment, after the target UE is connected by means of traditional wireless cellular communication, the BS corresponding to the target UE, that is, the current transmitter, may control a wide beam to be divided into narrow beams and users to be partitioned, and further search a respective area for a secondary communication path corresponding to the UE, so as to improve a user capacity and a system capacity. Specifically, the secondary communication path may be an NLoS channel in a general case.
   Specifically, the UEs in the beam on the primary communication path may be classified into the newly connected UE, that is, the target UE that sends the SRS, and UE that already exists in the beam on the primary communication path and whose secondary communication path is determined. Optionally, the secondary communication path corresponding to the target UE may be determined by detecting the SRS that is sent by the target UE by using the fully deployed narrow beam.
S305: Determine a secondary communication path corresponding to another UE in a beam on the primary communication path.
   Further, optionally, after the primary communication path between the current BS and the target UE is obtained by means of determining, a secondary communication path corresponding to another UE sharing the primary communication path may be further extracted, so as to determine secondary communication paths corresponding to all UEs that perform communication by using the primary communication path, that is, all UEs in the beam on the primary communication path. The another UE sharing the primary communication path is UE that already exists in the beam on the primary communication path, and a secondary communication path between the existing UE and the current BS may be recorded and saved. Further, the recoded and saved secondary communication path only needs to be extracted for determining the secondary communication path of the existing UE.
S306: Communicate with each UE according to the primary communication path and the secondary communication path corresponding to each UE.

In a specific embodiment, frame formats of uplink and downlink subframes corresponding to the UE in the beam on the primary communication path may be determined according to the secondary communication path that is corresponding to the UE in the beam on the primary communication path and that is obtained by means of determining, and then a communication path used for transmitting uplink and downlink subframes corresponding to each UE is determined, so that communication between the BS and the UE in the beam on the primary communication path is performed.

By implementing this embodiment of the present invention, a primary communication path for communication between a current BS and target UE that sends an SRS may be determined according to the SRS signal, and a secondary communication path may be determined for each UE that performs communication by using the primary communication path, so that communication with each UE is performed based on the primary communication path and the secondary communication path, which can effectively improve a data transmission throughput and data transmission efficiency of a system.

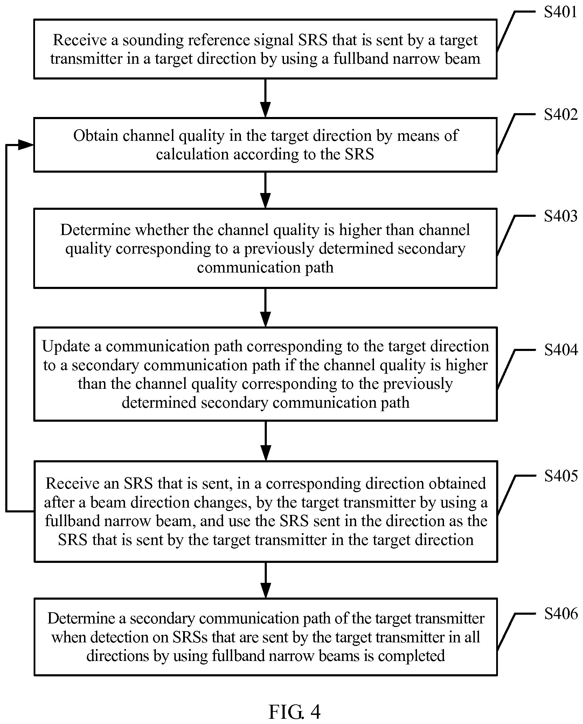

Referring to FIG. 4, FIG. 4 is a schematic flowchart of a method for determining a secondary communication path according to an embodiment of the present invention. The method in this embodiment of the present invention may be specifically applied to a communications device that can be used as a receiver, for example, a BS or an MS. Specifically, the method includes:
S401: Receive a sounding reference signal SRS that is sent by the target transmitter in a target direction by using a fully deployed narrow beam.
S402: Obtain channel quality in the target direction by means of calculation according to the SRS.
   If a current BS receives an SRS sent, by using a fully deployed narrow beam, by UE that sends the SRS, that is, target UE (the target transmitter), the current BS calculates channel quality in a direction at the current moment according to the SRS.
S403: Determine whether the channel quality is higher than channel quality corresponding to a previously determined secondary communication path.
   After obtaining the channel quality in the direction at the current moment by means of calculation, the current BS compares the channel quality in the direction at the current moment with channel quality obtained by means of calculation at a previous moment, and detects whether the channel quality in the direction at the current moment is higher than the channel quality obtained by means of calculation at the previous moment.
S404: Update a communication path corresponding to the target direction to a secondary communication path if the channel quality is higher than the channel quality corresponding to the previously determined secondary communication path.
   If the channel quality in the target direction, that is, in the direction at the current moment, is higher than the channel quality obtained by means of calculation at the previous moment, it indicates that the communication path corresponding to the direction at the current moment may be updated to a secondary communication path between the current BS and the target UE.
   Further, before the communication path corresponding to the direction at the current moment is updated to the secondary communication path between the current BS and the target UE, if it is detected that the channel quality in the direction at the current moment is higher than the channel quality obtained by means of calculation at the previous moment, whether the communication path corresponding to the direction at the current moment is a primary communication path between the current BS and the target UE may be further detected. If the communication path corresponding to the direction at the current moment is not the primary communication path, the communication path corresponding to the target direction is updated to the secondary communication path.
   Further, if it is detected that the communication path corresponding to the direction at the current moment is not the primary communication path between the current BS and the target UE, whether the channel quality of the communication path corresponding to the direction at the moment is higher than a preset QoS threshold may be further detected. If it is detected that the channel quality of the communication path corresponding to the direction at the moment is higher than the QoS threshold, the communication path corresponding to the direction at the current moment may be updated to the secondary communication path. The QoS threshold may be set according to a specific channel quality requirement, which is not limited in this embodiment of the present invention.
S405: Receive an SRS that is sent, in a corresponding direction obtained after a beam direction changes, by the target transmitter by using a fully deployed narrow beam, and use the SRS sent in the direction as the SRS that is sent by the target transmitter in the target direction.
S406: Determine a secondary communication path of the target transmitter when detection on SRSs that are sent by the target transmitter in all directions by using fully deployed narrow beams is completed.

The target UE changes a beam direction according to a preset time interval, uses, as the target direction, a corresponding direction obtained after the beam direction changes, and sends an SRS in the target direction by using a fully deployed narrow beam. If the current BS receives the SRS that is sent by the target UE in the target direction, the current BS repeatedly executes S402 to S405 until the current BS completes detection on the SRSs that are sent by the target UE in all the directions by using the fully deployed narrow beams, and uses a determined secondary communication path as the secondary communication path between the current BS and the target UE.

By implementing this embodiment of the present invention, after receiving an SRS sent by target UE, a current BS may compare channel quality in a direction at a current moment with channel quality in a direction at a previous moment to determine whether to update a secondary communication path corresponding to the target UE, and use a determined secondary communication path as a secondary communication path between the current BS and the target UE after the current BS completes detection on SRSs that are sent by the target UE in all directions according to a preset time interval by using fully deployed narrow beams.

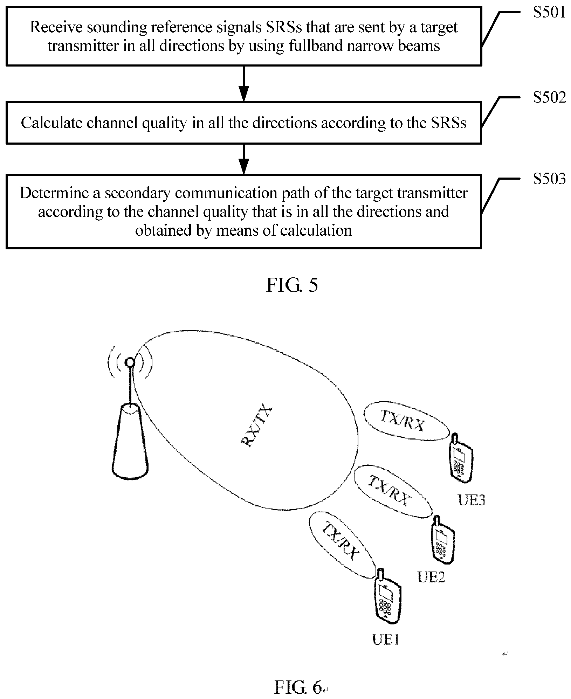

Referring to FIG. 5, FIG. 5 is a schematic flowchart of another method for determining a secondary communication path according to an embodiment of the present invention. Specifically, the method includes:
S501: Receive sounding reference signals SRSs that are sent by the target transmitter in all directions by using fully deployed narrow beams.
S502: Calculate channel quality in all the directions according to the SRSs.
   Target UE sends SRSs in all directions by using fully deployed narrow beams, and a current BS receives the SRSs sent by the target UE and calculates, according to the received SRSs, channel quality of communication paths corresponding to all the directions. Specifically, sending the SRSs in all the directions may be implemented by changing a beam direction according to a preset time interval and sending, in a corresponding direction obtained after the beam direction changes, an SRS by using a fully deployed narrow beam.
S503: Determine a secondary communication path of the target transmitter according to the channel quality that is in all the directions and obtained by means of calculation.

After obtaining the channel quality of the communication paths corresponding to all the directions by means of calculation, the current BS may select, as a secondary communication path corresponding to the target UE, a communication path corresponding to a direction with optimal channel quality of the channel quality in all the directions except channel quality in a direction of a primary communication path.

Further, before the communication path corresponding to the direction with optimal channel quality except the channel quality in the direction of the primary communication path is determined as the secondary communication path corresponding to the target UE, whether the channel quality corresponding to the communication path is higher than a preset QoS threshold may be further detected; and if the channel quality corresponding to the communication path is higher than the QoS threshold, the communication path may be determined as the secondary communication path corresponding to the target UE.

By implementing this embodiment of the present invention, after receiving SRSs that are sent by UE in all directions by using fully deployed narrow beams, a BS may obtain channel quality in all the directions by means of calculation and comparison, and directly select, as a secondary communication path corresponding to the target UE, a communication path corresponding to a direction with optimal channel quality of the channel quality in all the directions except channel quality in a direction of a primary communication path.

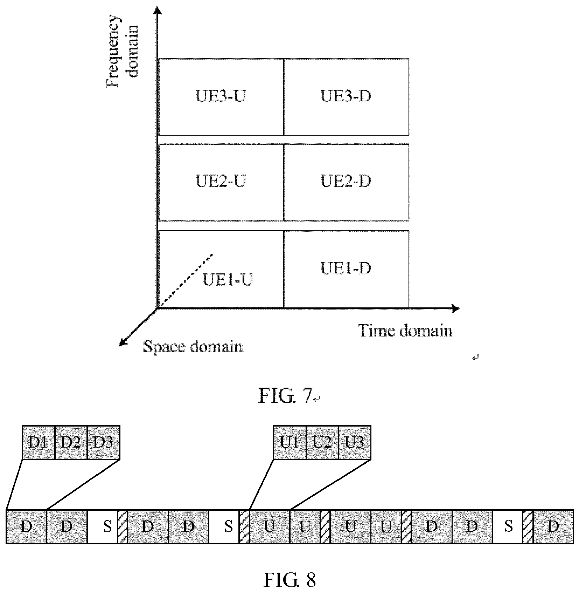

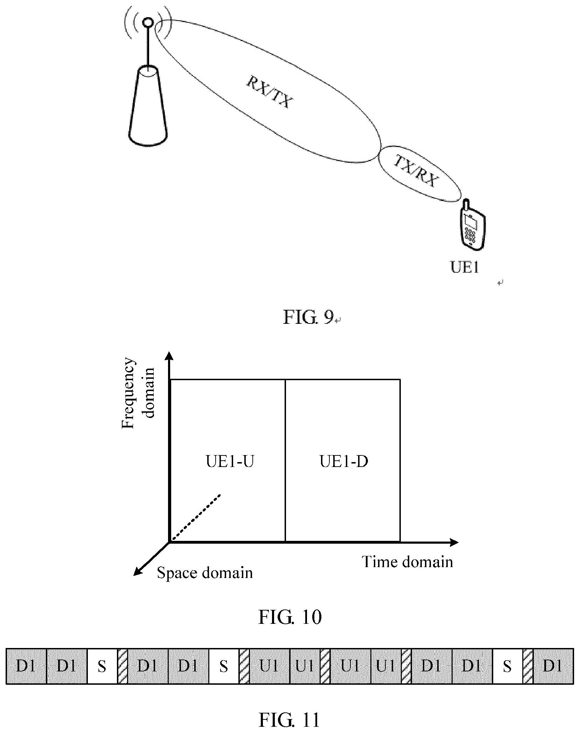

Further, communication with a transmitter according to the primary communication path and a secondary communication path may include the following five communication scenarios:
Scenario 1: If there are at least two identifiers of transmitters that perform communication by using the primary communication path, and a transmitter indicated by each identifier does not have a secondary communication path, quantities of uplink and downlink subframes corresponding to the transmitters are configured according to a preset configuration ratio, where the uplink and downlink subframes of the transmitters are transmitted in a time division multiplexing manner.
   Frame formats of the uplink and downlink subframes are the same, the uplink and downlink subframes include information corresponding to the transmitters, and the transmitters allocate fully deployed bandwidth resources in a frequency division multiplexing manner.
   Specifically, referring to FIG. 6, FIG. 6 is a schematic diagram of a communication scenario according to an embodiment of the present invention. In the scenario, there may be multiple transmitters that perform communication by using the primary communication path, that is, there are multiple transmitters in a beam corresponding to the primary communication path. In a specific example in FIG. 6, there are three UEs (that is, three transmitters) in the beam corresponding to the primary communication path: UE1, UE2, and UE3 respectively; none of the UEs has a secondary communication path.
   Further, as shown in FIG. 7, FIG. 7 is a schematic diagram of resource allocation in the scenario in FIG. 6. Specifically, the UE1, the UE2, and the UE3 are distinguished in a frequency division manner, and an uplink and a downlink are distinguished in a time division manner.
   Further, frame formats of an uplink and a downlink corresponding to each UE are the same. As shown in FIG. 8, FIG. 8 is a schematic diagram of a corresponding frame format in the scenario in FIG. 6. Quantities of uplink and downlink subframes may be configured according to a preset configuration ratio (configuration is performed according to 4:4 in FIG. 8), and the configuration ratio may be adjusted according to throughputs of uplink and downlink services. Specifically, SRSs may be inserted between the uplink and downlink subframes according to a preset insertion spacing. For example, one SRS signal may be inserted between every two subframes, which is represented by a shaded block in FIG. 8. The inserted SRS may be obtained by a current BS based on SRS information fed back by UE in the beam on the primary communication path. When an SRS is being inserted between downlink subframes or between a downlink subframe and an uplink subframe, the SRS signal needs to be wrapped in a special subframe S for insertion. When an SRS is being inserted between uplink subframes, the SRS only needs to be placed after a data block of the last subframe (or the SRS may also be wrapped in a special subframe S for insertion). As shown in FIG. 8, each uplink subframe U and each downlink subframe D may sequentially include, according to frequency allocation, information related to the UE1, the UE2, and the UE3, which are corresponding to U1 and D1, U2 and D2, and U3 and D3 respectively. Further, the insertion spacing for the SRS signal may be adjusted according to a moving speed requirement.
   In Scenario 1, although there are multiple UEs (three UEs in Scenario 1) in one beam, and none of the UEs has a corresponding secondary communication path, in comparison with a traditional wireless cellular communications system in a broadcast form, the beam in Scenario 1 is narrowed to some degree, that is, each beam covers fewer UEs. Therefore, a wider bandwidth can be allocated to each UE when a frequency band is multiplexed in a frequency division manner. For example, for a spectrum with a bandwidth of 300 MHz, the bandwidth may be equally allocated to the three UEs, where each UE occupies a bandwidth of 100 MHz, and a bandwidth of 100 MHz may be supported in both an uplink and a downlink. In the traditional cellular communications system in the broadcast form, there may be hundreds of UEs in each beam, and a bandwidth for each UE is less than 1 MHz. Therefore, a UE capacity and a system capacity are improved.
Scenario 2: If there is one identifier of a transmitter that performs communication by using the primary communication path, and the transmitter indicated by the identifier does not have a secondary communication path, quantities of uplink and downlink subframes corresponding to the transmitter are configured according to a preset configuration ratio, where the uplink and downlink subframes of the transmitter are transmitted in a time division multiplexing manner.
   Frame formats of the uplink and downlink subframes are the same, the uplink and downlink subframes include information about the transmitter, and the transmitter occupies fully deployed bandwidth resources.
   Specifically, referring to FIG. 9, FIG. 9 is a schematic diagram of another communication scenario according to an embodiment of the present invention. As shown in FIG. 9, in the scenario, there is only one transmitter that performs communication by using the primary communication path, that is, there is only one UE, namely UE1, in a beam corresponding to the primary communication path, and the UE does not have a secondary communication path. Scenario 2 may be considered as a special example of Scenario 1.
   Further, as shown in FIG. 10, FIG. 10 is a schematic diagram of resource allocation in the scenario in FIG. 9. The UE1 in the beam on the primary communication path exclusively occupies a fully deployed, and an uplink and a downlink are distinguished in a time division manner.
   Further, frame formats of an uplink and a downlink corresponding to the UE1 are the same. As shown in FIG. 11, FIG. 11 is a schematic diagram of a corresponding frame format in the scenario in FIG. 9. Each uplink U1 and each downlink subframe D1 include only information about the UE1. Quantities of uplink and downlink subframes may be configured according to a preset configuration ratio, for example, 4:4, and the configuration ratio may be adjusted according to throughputs of uplink and downlink services. Specifically, a manner of inserting an SRS signal in this scenario is the same as the manner of inserting an SRS signal in the foregoing scenario, and details are not described herein. Further, an insertion spacing for the SRS signal may be adjusted according to a moving speed requirement.
   In Scenario 2, although the UE does not have a corresponding secondary communication path, there is only one UE in the beam, and the UE exclusively uses bandwidth resources. For example, for a spectrum with a bandwidth of 300 MHz, the UE occupies the bandwidth of 300 MHz, and a bandwidth of 300 MHz may be supported in both an uplink and a downlink, and therefore a UE capacity and a system capacity are significantly improved.
Scenario 3: It is assumed that there are at least two identifiers of transmitters that perform communication by using the primary communication path, and a transmitter indicated by each identifier has a secondary communication path.

In an optional implementation manner, the primary communication path may be controlled to be used to transmit downlink subframes of the transmitters indicated by the identifiers, where the downlink subframes of the transmitters are transmitted in a frequency division multiplexing manner.

The secondary communication path is controlled to be used to transmit an uplink subframe of a corresponding transmitter, where uplink subframes of the transmitters are transmitted in a spatial multiplexing manner, the uplink subframes of the transmitters exclusively occupy fully deployed bandwidth resources, and the uplink subframes and the downlink subframes of the transmitters are different in format.

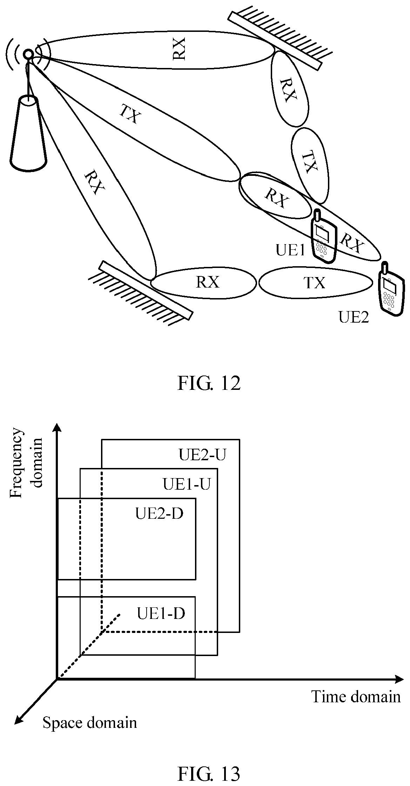

Specifically, referring to FIG. 12, FIG. 12 is a schematic diagram of still another communication scenario according to an embodiment of the present invention. As shown in FIG. 12, in the scenario, there are multiple transmitters that perform communication by using the primary communication path, that is, there are multiple transmitters in a beam corresponding to the primary communication path. In a specific example in FIG. 12, there are two UEs in the beam corresponding to the primary communication path, which are UE1 and UE2 respectively; the two UEs each have an available secondary communication path.

Further, as shown in FIG. 13, FIG. 13 is a schematic diagram of resource allocation in the scenario in FIG. 12. Specifically, uplinks of the UE1 and the UE2 in the beam on the primary communication path are distinguished in a space division manner, and downlinks of the two UEs are distinguished in a frequency division manner.

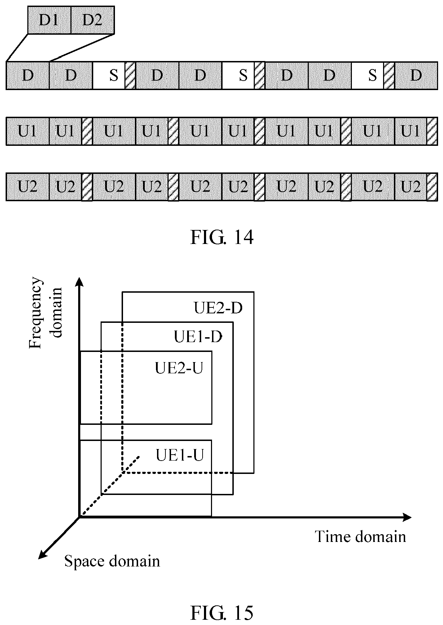

Specifically, the primary communication path may be controlled to be used only for downlink subframe transmission instead of uplink subframe transmission, and correspondingly, the secondary communication path is used only for uplink transmission instead of downlink subframe transmission. Frame formats of an uplink and a downlink of each UE are different and are independent of each other. As shown in FIG. 14, FIG. 14 is a schematic diagram of a frame format in the scenario in FIG. 12. The frame format in the scenario does not have a problem of a configuration ratio of quantities of uplink and downlink subframes. Specifically, each uplink subframe U includes only information about the UE1 or the UE2, where the information is corresponding to U1 or U2 respectively. Each downlink subframe D may sequentially include information about the two UEs, that is, D1 and D2. A manner of inserting an SRS signal in this scenario is the same as the manner of inserting an SRS signal in the foregoing scenario, and details are not described herein. Further, an insertion spacing for the SRS signal may be adjusted according to a moving speed requirement.

In Scenario 3, there are multiple UEs in a beam, and each UE has an available secondary communication path. All the UEs share downlink spectrum resources, and each UE exclusively uses uplink bandwidth resources. For example, for a spectrum with a bandwidth of 300 MHz, there are two UEs in the beam, where a downlink of each UE occupies a bandwidth of 150 MHz, and an uplink of each UE occupies a bandwidth of 300 MHz. Therefore, both a UE capacity and a system throughput are greatly improved.

In an optional implementation manner, the primary communication path may be controlled to be used to transmit uplink subframes of the transmitters indicated by the identifiers, where the uplink subframes of the transmitters are transmitted in a frequency division multiplexing manner.

The secondary communication path is controlled to be used to transmit a downlink subframe of a corresponding transmitter, where downlink subframes of the transmitters are transmitted in a spatial multiplexing manner, the downlink subframes of the transmitters exclusively occupy fully deployed bandwidth resources, and the uplink subframes and the downlink subframes of the transmitters are different in format.

Specifically, as shown in FIG. 15, FIG. 15 is a schematic diagram of another type of resource allocation in the scenario in FIG. 12. Downlinks of the UE1 and the UE2 in the beam on the primary communication path are distinguished in a space division manner, and uplinks of the two UEs are distinguished in a frequency division manner.

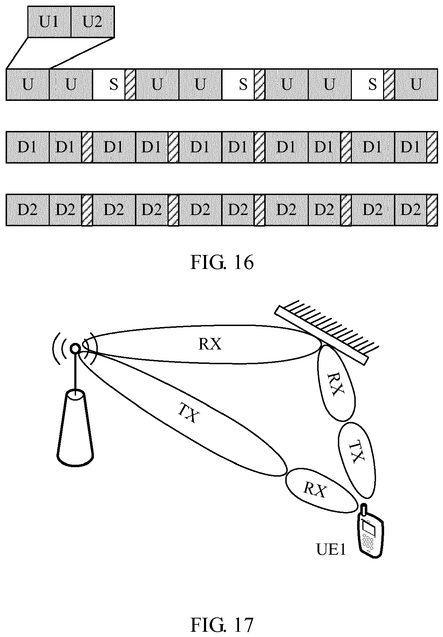

Specifically, the primary communication path may be controlled to be used only for uplink subframe transmission, and the secondary communication path may be controlled to be used only for downlink transmission. Frame formats of an uplink and a downlink of each UE are different and are independent of each other. As shown in FIG. 16, FIG. 16 is a schematic diagram of another frame format in the scenario in FIG. 12. Each downlink subframe D includes only information about the UE1 or the UE2, which is corresponding to D1 or D2 respectively; each uplink subframe U may sequentially include information about the two UEs, that is, U1 and U2.

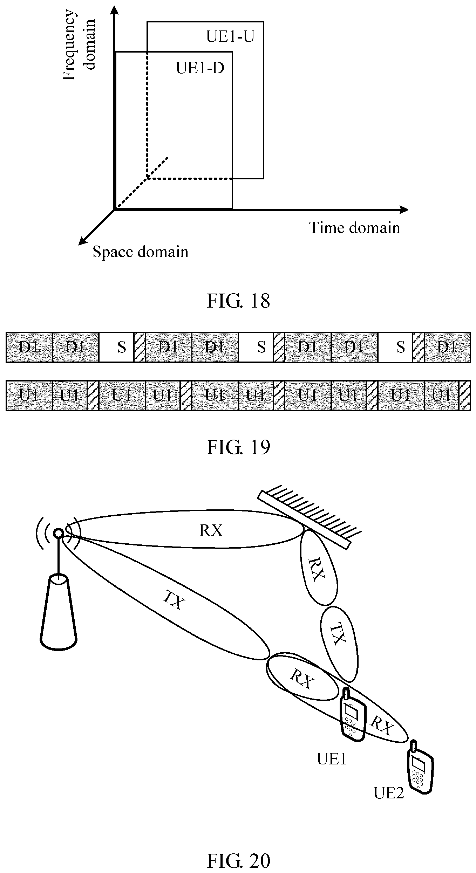

In Scenario 3, there are multiple UEs in a beam, and each UE has an available secondary communication path. All the UEs share uplink spectrum resources, and each UE exclusively uses downlink bandwidth resources. For example, for a spectrum with a bandwidth of 300 MHz, there are two UEs in the beam, where an uplink of each UE occupies a bandwidth of 150 MHz, and a downlink of each UE occupies a bandwidth of 300 MHz. Therefore, both a UE capacity and a system throughput are greatly improved.
Scenario 4: If there is one identifier of a transmitter that performs communication by using the primary communication path, and the transmitter indicated by the identifier has a corresponding secondary communication path, an uplink subframe and a downlink subframe of the transmitter are transmitted in a spatial multiplexing manner, where the uplink subframe and the downlink subframe are different in format, and the transmitter occupies fully deployed bandwidth resources.
   Specifically, referring to FIG. 17, FIG. 17 is a schematic diagram of yet another communication scenario according to an embodiment of the present invention. As shown in FIG. 17, in the scenario, there is only one transmitter that uses the primary communication path, that is, there is only one UE, namely UE1, in a beam corresponding to the primary communication path, and the UE has an available secondary communication path.
   Further, as shown in FIG. 18, FIG. 18 is a schematic diagram of resource allocation in the scenario in FIG. 17. Specifically, the UE in the beam on the primary communication path may exclusively occupy a fully deployed, and an uplink and a downlink are distinguished in a space division manner.
   Specifically, the primary communication path may be controlled to be used only for downlink subframe transmission, and the secondary communication path is used only for uplink transmission; or the primary communication path may be controlled to be used only for uplink subframe transmission, and the secondary communication path is used only for downlink subframe transmission. Frame formats of the uplink and downlink subframes are different and are independent of each other. As shown in FIG. 19, FIG. 19 is a schematic diagram of a corresponding frame format in the scenario in FIG. 17. The frame format does not have a problem of a configuration ratio of quantities of uplink and downlink subframes. Specifically, each uplink subframe U1 and each downlink subframe D1 include only information about the UE. A manner of inserting an SRS signal in this scenario is the same as a manner of inserting an SRS signal in the foregoing scenario, and details are not described herein. Further, an insertion spacing for the SRS signal may be adjusted according to a moving speed requirement.
   In Scenario 4, there is only one UE in a beam, the UE has an available secondary communication path, and the UE exclusively uses bandwidth resources. For example, for a spectrum with a bandwidth of 300 MHz, the UE occupies a bandwidth of 300 MHz, and a bandwidth of 300 MHz may be supported in both an uplink and a downlink. Therefore, a UE capacity is significantly improved.
Scenario 5: There are at least two identifiers of transmitters that perform communication by using the primary communication path, a quantity of secondary communication paths is greater than zero, and the quantity of secondary communication paths is less than a quantity of identifiers.

Specifically, referring to FIG. 20, FIG. 20 is a schematic diagram of still yet another communication scenario according to an embodiment of the present invention. As shown in FIG. 20, in the scenario, there are multiple transmitters that share the primary communication path, that is, there are multiple transmitters in a beam corresponding to the primary communication path. In a specific example in FIG. 20, there are two UEs, that is, UE1 and UE2, in the beam corresponding to the primary communication path, and only the UE1 has an available secondary communication path.

In an optional implementation manner, the primary communication path may be controlled to be used to transmit downlink subframes of the transmitters, where the downlink subframes of the transmitters are transmitted in a frequency division multiplexing manner, and the transmitters include a first transmitter that does not have a secondary communication path, that is, the UE2, and a second transmitter that has a secondary communication path, that is, the UE1.

The primary communication path is controlled to be used to transmit an uplink subframe of the first transmitter, where the uplink subframe of the first transmitter is transmitted in a frequency division multiplexing manner, and uplink and downlink subframes of the first transmitter are transmitted in a time division multiplexing manner.

The secondary communication path is controlled to be used to transmit an uplink subframe of the second transmitter, where the uplink subframe of the second transmitter is transmitted in a spatial multiplexing manner, and the uplink subframe and a downlink subframe of the second transmitter are different in format.

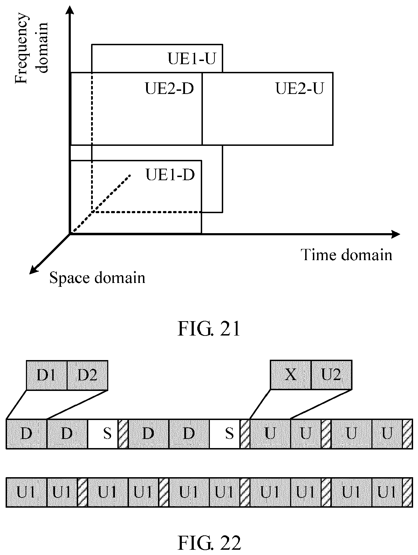

Specifically, as shown in FIG. 21, FIG. 21 is a schematic diagram of resource allocation in the scenario in FIG. 20. Specifically, downlinks of the UE1 and the UE2 in the beam on the primary communication path are distinguished in a frequency division manner, an uplink and a downlink of the UE2 are distinguished in a time division manner, and an uplink and a downlink of the UE1 are distinguished in a space division manner.

Specifically, the primary communication path may be controlled to be used only for downlink subframe transmission, and the secondary communication path may be controlled to be used only for uplink subframe transmission. Frame formats of the uplink and the downlink of the UE1 are different and are independent of each other, and frame formats of the uplink and the downlink of the UE2 are the same. As shown in FIG. 22, FIG. 22 is a schematic diagram of a frame format in the scenario in FIG. 20. Because the UE1 and the UE2 share a downlink and a frame format of a downlink beam, when the UE2 transmits uplink data in a time division multiplexing manner, a bandwidth that belongs to the UE1 can be idle only. Quantities of uplink and downlink subframes may be configured according to a preset configuration ratio, for example, 4:4, and further, the configuration ratio may be adjusted according to throughputs of uplink and downlink services. Because an uplink subframe U1 of the UE1 may be transmitted in a spatial multiplexing manner by using the secondary communication path, the uplink subframe U1 of the UE1 has an independent frame format. Specifically, each uplink subframe U1 transmitted by using the secondary communication path includes only information about the UE1; each downlink subframe D transmitted by using the primary communication path sequentially includes information about the UE1 and information about the UE2, that is, the information about the UE1 and the information about the UE2 are corresponding to D1 and D2 respectively. In each uplink subframe U, a frequency band that belongs to the UE1 is idle, and is represented by X in FIG. 22, and a frequency band that belongs to the UE2 includes information about the UE2, that is, the information about the UE2 is corresponding to U2. A manner of inserting an SRS signal in this scenario is the same as the manner of inserting an SRS signal in the foregoing scenario, and details are not described herein. An insertion spacing for the SRS signal may be adjusted according to a moving speed requirement. Further, uplink data of the UE2 may be further controlled, by using a particular technology, to be sent in a bandwidth that is in an uplink subframe and of the UE1 in the primary communication path.

In Scenario 5, there are multiple UEs in a beam, but not each UE has an available secondary communication path. All the UEs share downlink spectrum resources, and UE that has a sub-optimal path exclusively uses uplink bandwidth resources. For example, for a spectrum with a bandwidth of 300 MHz, if the beam only includes the UE1 and the UE2, and only the UE1 has a corresponding secondary communication path, a downlink of each UE occupies a bandwidth of 150 MHz, an uplink of the UE2 occupies a bandwidth of 150 MHz, and an uplink of the UE1 occupies a bandwidth of 300 MHz. Therefore, both a UE capacity and a system throughput are greatly improved.

In an optional implementation manner, the primary communication path may be controlled to be used to transmit uplink subframes of the transmitters, where the uplink subframes of the transmitters are transmitted in a frequency division multiplexing manner, and the transmitters include a first transmitter that does not have a secondary communication path, that is, the UE2, and a second transmitter that has a secondary communication path, that is, the UE1.

The primary communication path is controlled to be used to transmit a downlink subframe of the first transmitter, where the downlink subframe of the first transmitter is transmitted in a frequency division multiplexing manner, and uplink and downlink subframes of the first transmitter are transmitted in a time division multiplexing manner.

The secondary communication path is controlled to be used to transmit a downlink subframe of the second transmitter, where the downlink subframe of the second transmitter is transmitted in a spatial multiplexing manner, and an uplink subframe and the downlink subframe of the second transmitter are different in format.

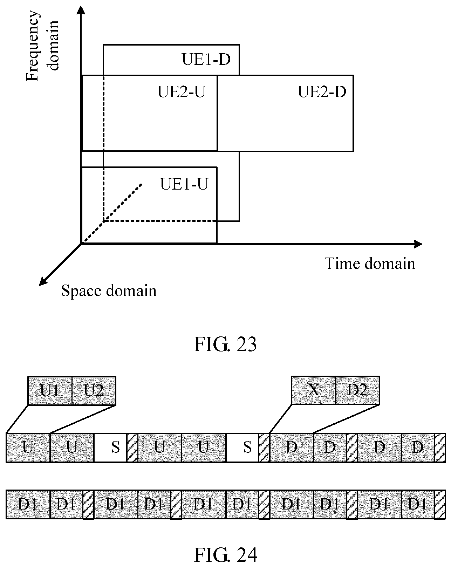

Specifically, referring to FIG. 23, FIG. 23 is a schematic diagram of another type of resource allocation in the scenario shown in FIG. 20. Uplinks of the UE1 and the UE2 in the beam on the primary communication path are distinguished in a frequency division manner, an uplink and a downlink of the UE2 are distinguished in a time division manner, and an uplink and a downlink of the UE1 are distinguished in a space division manner.

Specifically, the primary communication path may be controlled to be used only for uplink subframe transmission, and the secondary communication path may be controlled to be used only for downlink subframe transmission. Frame formats of the uplink and the downlink of the UE1 are different and are independent of each other, and frame formats of the uplink and the downlink of the UE2 are the same. As shown in FIG. 24, FIG. 24 is a schematic diagram of another frame format in the scenario in FIG. 20. Because the UE1 and the UE2 share an uplink and a frame format of an uplink beam, when the UE2 transmits downlink data in a time division multiplexing manner, a bandwidth that belongs to the UE1 can be idle only. Quantities of uplink and downlink subframes may be configured according to a preset configuration ratio, for example, 4:4, and further, the configuration ratio may be adjusted according to throughputs of uplink and downlink services. Because a downlink subframe U1 of the UE1 may be transmitted in a spatial multiplexing manner by using the secondary communication path, the downlink subframe D1 of the UE1 has an independent frame format. Specifically, each downlink subframe D1 transmitted by using the secondary communication path includes only information about the UE1; each uplink subframe U transmitted by using the primary communication path sequentially includes information about the UE1 and information about the UE2, that is, the information about the UE1 and the information about the UE2 are corresponding to U1 and U2 respectively. In each downlink subframe D, a frequency band that belongs to the UE1, that is, X in FIG. 24, is idle, and a frequency band that belongs to the UE2 includes information about the UE2, that is, the information about the UE2 is corresponding to D2. Further, downlink data of the UE2 may be further controlled, by using a particular technology, to be sent in a bandwidth that is in a downlink subframe and of the UE1 in the primary communication path.

In the foregoing scenario, there are multiple UEs in a beam, but not each UE has an available secondary communication path. All the UEs share uplink spectrum resources, and UE that has a sub-optimal path exclusively uses downlink bandwidth resources. For example, for a spectrum with a bandwidth of 300 MHz, if the beam only includes the UE1 and the UE2, and only the UE1 has a corresponding secondary communication path, an uplink of each UE occupies a bandwidth of 150 MHz, a downlink of the UE2 occupies a bandwidth of 150 MHz, and a downlink of the UE1 occupies a bandwidth of 300 MHz. Therefore, both a UE capacity and a system throughput are greatly improved.

A frame format is determined according to a specific communication scenario, and after communication paths (including a primary communication path and a corresponding secondary communication path) used for transmitting uplink and downlink subframes are determined for each UE, communication between a BS and the UE may be prepared to be performed.

By implementing this embodiment of the present invention, after determining, according to a received SRS, a primary communication path for communication with UE that sends the SRS, a current BS may further determine a secondary communication path to the UE, extract a secondary communication path of another UE existing in a beam on the primary communication path, and communicate with each UE in the beam on the primary communication path based on a communication scenario that is determined according to the primary communication path and the secondary communication path, which can effectively improve a data transmission throughput and data transmission efficiency of a system.

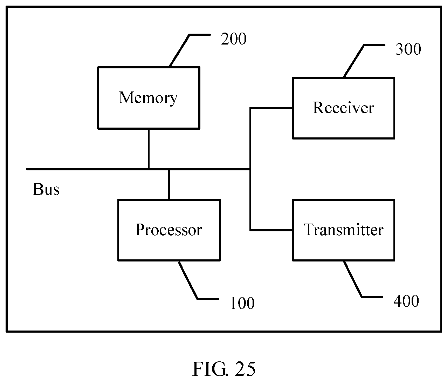

Referring to FIG. 25, FIG. 25 is a schematic structural diagram of a communications device according to an embodiment of the present invention. The communications device in this embodiment of the present invention includes: a receiver 300, a transmitter 400, a memory 200, and a processor 100, where the memory 200 may be a high-speed RAM memory, or may be a non-volatile memory (non-volatile memory), for example, at least one magnetic disk memory. As a computer storage medium, the memory 200 stores a corresponding application program and the like. Data connection may be performed among the receiver 300, the transmitter 400, the memory 200, and the processor 100 by using a bus, or in another manner. Connection performed by using a bus is described in this embodiment. Specifically, the communications device in this embodiment of the present invention may include the foregoing communications apparatus and may be specifically corresponding to a device that can be used as a receiver, for example, a BS or an MS.

The processor 100 executes the following steps:
determining a primary communication path to a target transmitter according to a first sounding reference signal SRS when the first signal SRS is received, where the target transmitter is a transmitter that sends the first SRS;
obtaining an identifier of a transmitter that performs communication by using the primary communication path, and determining a secondary communication path of a transmitter indicated by each identifier; and
communicating with the transmitter according to the primary communication path and the secondary communication path.

Optionally, when executing the determining a primary communication path to a target transmitter according to a first SRS when the first SRS is received, the processor 100 specifically executes the following steps:
determining an optimal direction of arrival according to a preset determining rule if the first SRS is received, where the first SRS is sent by the target transmitter by using a fully deployed wide beam; and
narrowing, in the optimal direction of arrival, the wide beam used by the target transmitter, and determining, as the primary communication path, a communication path on which a narrowed beam is located.

Optionally, when executing the obtaining an identifier of a transmitter that performs communication by using the primary communication path, and determining a secondary communication path of a transmitter indicated by each identifier, the processor 100 specifically executes the following steps:
obtaining the identifier of the transmitter that performs communication by using the primary communication path, and determining a secondary communication path of the target transmitter according to a second SRS that is sent by the target transmitter corresponding to a target identifier in the identifiers, where the target identifier is an identifier of the target transmitter; and
determining a secondary communication path of a transmitter indicated by another identifier in the identifiers.

Optionally, when executing the obtaining the identifier of the transmitter that performs communication by using the primary communication path, and determining a secondary communication path of the target transmitter according to a second SRS that is sent by the target transmitter corresponding to a target identifier in the identifiers, the processor 100 specifically executes the following steps:
receiving, by using the receiver 300, a second SRS that is sent by the target transmitter in a target direction by using a fully deployed narrow beam;
obtaining channel quality in the target direction by means of calculation according to the second SRS;
determining whether the channel quality is higher than channel quality corresponding to a previously determined secondary communication path; and
updating a communication path corresponding to the target direction to a secondary communication path if the channel quality is higher than the channel quality corresponding to the previously determined secondary communication path.

Further, optionally, when executing the updating a communication path corresponding to the target direction to a secondary communication path, the processor 100 specifically executes the following steps:
determining whether the communication path corresponding to the target direction is the primary communication path;
if a determining result is that the communication path corresponding to the target direction is not the primary communication path, detecting whether the channel quality of the communication path corresponding to the target direction is higher than a preset communication quality of service QoS threshold; and
updating the communication path corresponding to the target direction to a secondary communication path if the channel quality of the communication path corresponding to the target direction is higher than the QoS threshold.

Specifically, the target transmitter changes a beam direction according to a preset time interval, uses, as the target direction, a corresponding direction obtained after the beam direction changes, and sends an SRS in the target direction by using a fully deployed narrow beam. The receiver receives an SRS sent by target UE in the target direction, calculates and determines channel quality in the direction until detection on SRSs sent by the target UE in all directions is completed, and then may use a determined secondary communication path as a secondary communication path between the current BS and the target UE.

In an optional implementation manner, when executing the communicating with the transmitter according to the primary communication path and the secondary communication path, the processor 100 specifically executes the following steps:
if there are at least two identifiers of transmitters that perform communication by using the primary communication path, and a transmitter indicated by each identifier has a secondary communication path, controlling the primary communication path to be used to transmit uplink subframes of the transmitters indicated by the identifiers, where the uplink subframes of the transmitters are transmitted in a frequency division multiplexing manner; and
controlling the secondary communication path to be used to transmit a downlink subframe of a corresponding transmitter, where downlink subframes of the transmitters are transmitted in a spatial multiplexing manner, the downlink subframes of the transmitters exclusively occupy fully deployed bandwidth resources, and the uplink subframes and the downlink subframes of the transmitters are different in format.

Optionally, when executing the communicating with the transmitter according to the primary communication path and the secondary communication path, the processor 100 specifically executes the following steps:
if there are at least two identifiers of transmitters that perform communication by using the primary communication path, and a transmitter indicated by each identifier has a secondary communication path, controlling the primary communication path to be used to transmit downlink subframes of the transmitters indicated by the identifiers, where the downlink subframes of the transmitters are transmitted in a frequency division multiplexing manner; and
controlling the secondary communication path to be used to transmit an uplink subframe of a corresponding transmitter, where uplink subframes of the transmitters are transmitted in a spatial multiplexing manner, the uplink subframes of the transmitters exclusively occupy fully deployed bandwidth resources, and the uplink subframes and the downlink subframes of the transmitters are different in format.

In an optional implementation manner, when executing the communicating with the transmitter according to the primary communication path and the secondary communication path, the processor 100 specifically executes the following step:
if there is one identifier of a transmitter that performs communication by using the primary communication path, and the transmitter indicated by the identifier has a corresponding secondary communication path, transmitting an uplink subframe and a downlink subframe of the transmitter in a spatial multiplexing manner, where the uplink subframe and the downlink subframe are different in format, and the transmitter occupies fully deployed bandwidth resources.

In an optional implementation manner, when executing the communicating with the transmitter according to the primary communication path and the secondary communication path, the processor 100 specifically executes the following steps:
if there are at least two identifiers of transmitters that perform communication by using the primary communication path, a quantity of secondary communication paths is greater than zero, and the quantity of secondary communication paths is less than a quantity of the identifiers, controlling the primary communication path to be used to transmit uplink subframes of the transmitters indicated by the identifiers, where the uplink subframes of the transmitters are transmitted in a frequency division multiplexing manner, and the transmitters include at least one first transmitter that does not have a secondary communication path and a second transmitter that has a secondary communication path;
controlling the primary communication path to be used to transmit a downlink subframe of each first transmitter, where the downlink subframe of each first transmitter is transmitted in a frequency division multiplexing manner, and uplink and downlink subframes of the first transmitter are transmitted in a time division multiplexing manner; and
controlling the secondary communication path to be used to transmit a downlink subframe of the second transmitter, where the downlink subframe of the second transmitter is transmitted in a spatial multiplexing manner, and an uplink subframe and the downlink subframe of the second transmitter are different in format.

Optionally, when executing the communicating with the transmitter according to the primary communication path and the secondary communication path, the processor 100 specifically executes the following steps:
if there are at least two identifiers of transmitters that perform communication by using the primary communication path, a quantity of secondary communication paths is greater than zero, and the quantity of secondary communication paths is less than a quantity of the identifiers, controlling the primary communication path to be used to transmit downlink subframes of the transmitters indicated by the identifiers, where the downlink subframes of the transmitters are transmitted in a frequency division multiplexing manner, and the transmitters include at least one first transmitter that does not have a secondary communication path and a second transmitter that has a secondary communication path;
controlling the primary communication path to be used to transmit an uplink subframe of each first transmitter, where the uplink subframe of each first transmitter is transmitted in a frequency division multiplexing manner, and uplink and downlink subframes of the first transmitter are transmitted in a time division multiplexing manner; and
controlling the secondary communication path to be used to transmit an uplink subframe of the second transmitter, where the uplink subframe of the second transmitter is transmitted in a spatial multiplexing manner, and the uplink subframe and a downlink subframe of the second transmitter are different in format.

Further, optionally, the processor 100 further executes the following step:
inserting a third SRS into the uplink and downlink subframes according to a preset insertion spacing, where
the inserting a third SRS into the uplink and downlink subframes includes:
   directly inserting the third SRS into a uplink subframe or wrapping the third SRS in a special subframe and inserting the special subframe into the uplink subframe; and
wrapping the third SRS in a special subframe and inserting the special subframe into the downlink subframe or at a switching location of the downlink subframe and the uplink subframe.

By implementing this embodiment of the present invention, a primary communication path for communication between a current transmitter and a target transmitter may be determined according to an SRS signal received by a receiver, and a secondary communication path is determined for each transmitter that performs communication by using the primary communication path, so that communication with each transmitter is performed based on the primary communication path and the secondary communication path, which effectively improves a system transmission capacity.

A person of ordinary skill in the art may understand that all or some of the procedures of the methods in the foregoing embodiments may be implemented by a computer program instructing relevant hardware. The program may be stored in a computer readable storage medium. When the program runs, the procedures of the foregoing method embodiments may be executed. The storage medium may be: a magnetic disk, an optical disc, a read-only memory (English full name: Read-Only Memory, ROM for short), a random access memory (English full name: Random Access Memory, RAM for short), or the like.

What is disclosed above is merely exemplary embodiments of the present invention, and certainly is not intended to limit the protection scope of the present invention. Therefore, equivalent variations made in accordance with the claims of the present invention shall fall within the scope of the present invention.

## Claims

1. A communications apparatus, comprising:
a first determining module, configured to determine a primary communication path to a target transmitter according to a first sounding reference signal SRS when the first SRS is received, wherein the target transmitter is a transmitter that sends the first SRS;
a second determining module, configured to: obtain an identifier of a transmitter that performs communication by using the primary communication path determined by the first determining module, and determine a secondary communication path of a transmitter indicated by each identifier; and
a communications module, configured to communicate with the transmitter according to the primary communication path determined by the first determining module and the secondary communication path determined by the second determining module.

2. The apparatus according to claim 1, wherein the first determining module comprises:
a direction determining unit, configured to determine an optimal direction of arrival according to a preset determining rule if the first SRS is received, wherein the first SRS is sent by the target transmitter by using a fully deployed wide beam; and
a beam narrowing unit, configured to: narrow, in the optimal direction of arrival determined by the direction determining unit, the wide beam used by the target transmitter, and determine, as the primary communication path, a communication path on which a narrowed beam is located.

3. The apparatus according to claim 1, wherein the second determining module comprises:
a first path obtaining unit, configured to: obtain identifiers of transmitters that performs communication by using the primary communication path, and determine a secondary communication path of the target transmitter according to a second SRS that is sent by the target transmitter corresponding to a target identifier in the identifiers, wherein the target identifier is an identifier of the target transmitter; and
a second path obtaining unit, configured to determine a secondary communication path of a transmitter indicated by another identifier in the identifiers.

4. The apparatus according to claim 3, wherein the first path obtaining unit comprises:
a judging subunit, configured to: receive the second SRS that is sent by the target transmitter in a target direction by using a fully deployed narrow beam, obtain channel quality in the target direction by means of calculation according to the second SRS, and determine whether the channel quality is higher than channel quality corresponding to a previously determined secondary communication path; and
an updating subunit, configured to update a communication path corresponding to the target direction to a secondary communication path if a determining result of the judging subunit is that the channel quality is higher than the channel quality corresponding to the previously determined secondary communication path.

5. The apparatus according to claim 4, wherein the updating subunit is specifically configured to:
if the determining result of the judging subunit is that the channel quality is higher than the channel quality corresponding to the previously determined secondary communication path, determine whether the communication path corresponding to the target direction is the primary communication path; if a determining result is that the communication path corresponding to the target direction is not the primary communication path, detect whether the channel quality of the communication path corresponding to the target direction is higher than a preset communication quality of service QoS threshold; and update the communication path corresponding to the target direction to the secondary communication path when the channel quality of the communication path corresponding to the target direction is higher than the QoS threshold.

6. The apparatus according to claim 1, wherein the communications module comprises:
a first transmission unit, configured toif there are at least two identifiers of transmitters that perform communication by using the primary communication path, and a transmitter indicated by each identifier has a secondary communication path, control the primary communication path to be used to transmit uplink subframes of the transmitters indicated by the identifiers, wherein the uplink subframes of the transmitters are transmitted in a frequency division multiplexing manner; and
a second transmission unit, configured to control the secondary communication path to be used to transmit a downlink subframe of a corresponding transmitter, wherein downlink subframes of the transmitters are transmitted in a spatial multiplexing manner, the downlink subframes of the transmitters exclusively occupy fully deployed bandwidth resources, and the uplink subframes and the downlink subframes of the transmitters are different in format.

7. The apparatus according to claim 1, wherein the communications module comprises:
a third transmission unit, configured to: if there are at least two identifiers of transmitters that perform communication by using the primary communication path, and a transmitter indicated by each identifier has a secondary communication path, control the primary communication path to be used to transmit downlink subframes of the transmitters indicated by the identifiers, wherein the downlink subframes of the transmitters are transmitted in a frequency division multiplexing manner; and
a fourth transmission unit, configured to control the secondary communication path to be used to transmit an uplink subframe of a corresponding transmitter, wherein uplink subframes of the transmitters are transmitted in a spatial multiplexing manner, the uplink subframes of the transmitters exclusively occupy fully deployed bandwidth resources, and the uplink subframes and the downlink subframes of the transmitters are different in format.

8. The apparatus according to claim 1, wherein the communications module comprises:
a fifth transmission unit, configured to: if there is one identifier of a transmitter that performs communication by using the primary communication path, and the transmitter indicated by the identifier has a corresponding secondary communication path, control the primary communication path to be used to transmit an uplink subframe of the transmitter, and control the secondary communication path to be used to transmit a downlink subframe of the transmitter; or
a sixth transmission unit, configured to: control the primary communication path to be used to transmit a downlink subframe of the transmitter, and control the secondary communication path to be used to transmit an uplink subframe of the transmitter, wherein
the uplink subframe and the downlink subframe of the transmitter are transmitted in a spatial multiplexing manner, the uplink subframe and the downlink subframe are different in format, and the transmitter occupies fully deployed bandwidth resources.

9. The apparatus according to claim 1, wherein the communications module comprises:
a seventh transmission unit, configured to: if there are at least two identifiers of transmitters that perform communication by using the primary communication path, a quantity of secondary communication paths is greater than zero, and the quantity of secondary communication paths is less than a quantity of the identifiers, control the primary communication path to be used to transmit uplink subframes of the transmitters indicated by the identifiers, wherein the uplink subframes of the transmitters are transmitted in a frequency division multiplexing manner, and the transmitters comprise at least one first transmitter that does not have a secondary communication path and a second transmitter that has a secondary communication path;
an eighth transmission unit, configured to control the primary communication path to be used to transmit a downlink subframe of each first transmitter, wherein the downlink subframe of each first transmitter is transmitted in a frequency division multiplexing manner, and uplink and downlink subframes of the first transmitter are transmitted in a time division multiplexing manner; and
a ninth transmission unit, configured to control the secondary communication path to be used to transmit a downlink subframe of the second transmitter, wherein the downlink subframe of the second transmitter is transmitted in a spatial multiplexing manner, and an uplink subframe and the downlink subframe of the second transmitter are different in format.

10. The apparatus according to claim 1, wherein the communications module comprises:
a tenth transmission unit, configured to: if there are at least two identifiers of transmitters that perform communication by using the primary communication path, a quantity of secondary communication paths is greater than zero, and the quantity of secondary communication paths is less than a quantity of the identifiers, control the primary communication path to be used to transmit downlink subframes of the transmitters indicated by the identifiers, wherein the downlink subframes of the transmitters are transmitted in a frequency division multiplexing manner, and the transmitters comprise at least one first transmitter that does not have a secondary communication path and a second transmitter that has a secondary communication path;
an eleventh transmission unit, configured to control the primary communication path to be used to transmit an uplink subframe of each first transmitter, wherein the uplink subframe of each first transmitter is transmitted in a frequency division multiplexing manner, and uplink and downlink subframes of the first transmitter are transmitted in a time division multiplexing manner; and
a twelfth transmission unit, configured to control the secondary communication path to be used to transmit an uplink subframe of the second transmitter, wherein the uplink subframe of the second transmitter is transmitted in a spatial multiplexing manner, and the uplink subframe and a downlink subframe of the second transmitter are different in format.

11. The apparatus according to any one of claims 6 to 10, further comprising:
an insertion module, configured to insert a third SRS into the uplink and downlink subframes according to a preset insertion spacing, wherein
the insertion module is specifically configured to:
directly insert the third SRS into a uplink subframe or wrap the third SRS in a special subframe and insert the special subframe into the uplink subframe; and wrap the third SRS in a special subframe and insert the special subframe into the downlink subframe or at a switching location of the downlink subframe and the uplink subframe.

12. A communication method, comprising:
determining a primary communication path to a target transmitter according to a first sounding reference signal SRS when the first SRS is received, wherein the target transmitter is a transmitter that sends the first SRS;
obtaining an identifier of a transmitter that performs communication by using the primary communication path, and determining a secondary communication path of a transmitter indicated by each identifier; and
communicating with the transmitter according to the primary communication path and the secondary communication path.

13. The method according to claim 12, wherein the determining a primary communication path to a target transmitter according to a first SRS when the first SRS is received comprises:
determining an optimal direction of arrival according to a preset determining rule if the first SRS is received, wherein the first SRS is sent by the target transmitter by using a fully deployed wide beam; and
narrowing, in the optimal direction of arrival, the wide beam used by the target transmitter, and determining, as the primary communication path, a communication path on which a narrowed beam is located.

14. The method according to claim 12, wherein the obtaining an identifier of a transmitter that performs communication by using the primary communication path, and determining a secondary communication path of a transmitter indicated by each identifier comprises:
obtaining identifiers of transmitters that performs communication by using the primary communication path, and determining a secondary communication path of the target transmitter according to a second SRS that is sent by the target transmitter corresponding to a target identifier in the identifiers, wherein the target identifier is an identifier of the target transmitter; and
determining a secondary communication path of a transmitter indicated by another identifier in the identifiers.

15. The method according to claim 14, wherein the obtaining identifiers of transmitters that performs communication by using the primary communication path, and determining a secondary communication path of the target transmitter according to a second SRS that is sent by the target transmitter corresponding to a target identifier in the identifiers comprises:
receiving the second SRS that is sent by the target transmitter in a target direction by using a fully deployed narrow beam;
obtaining channel quality in the target direction by means of calculation according to the second SRS;
determining whether the channel quality is higher than channel quality corresponding to a previously determined secondary communication path; and
updating a communication path corresponding to the target direction to a secondary communication path if the channel quality is higher than the channel quality corresponding to the previously determined secondary communication path.

16. The method according to claim 15, further comprising:
receiving a second SRS that is sent, in a corresponding direction obtained after a beam direction changes, by the target transmitter by using a fully deployed narrow beam, using the second SRS sent in the direction as the second SRS that is sent by the target transmitter in the target direction, and repeatedly executing the step of obtaining channel quality in the target direction by means of calculation according to the second SRS until detection on second SRSs that are sent by the target transmitter in all directions is completed.

17. The method according to claim 15, wherein the updating a communication path corresponding to the target direction to a secondary communication path comprises:
determining whether the communication path corresponding to the target direction is the primary communication path;
if a determining result is that the communication path corresponding to the target direction is not the primary communication path, detecting whether the channel quality of the communication path corresponding to the target direction is higher than a preset communication quality of service QoS threshold; and
updating the communication path corresponding to the target direction to the secondary communication path if the channel quality of the communication path corresponding to the target direction is higher than the QoS threshold.

18. The method according to claim 12, wherein the communicating with the transmitter according to the primary communication path and the secondary communication path comprises:
if there are at least two identifiers of transmitters that perform communication by using the primary communication path, and a transmitter indicated by each identifier has a secondary communication path, controlling the primary communication path to be used to transmit uplink subframes of the transmitters indicated by the identifiers, wherein the uplink subframes of the transmitters are transmitted in a frequency division multiplexing manner; and
controlling the secondary communication path to be used to transmit a downlink subframe of a corresponding transmitter, wherein downlink subframes of the transmitters are transmitted in a spatial multiplexing manner, the downlink subframes of the transmitters exclusively occupy fully deployed bandwidth resources, and the uplink subframes and the downlink subframes of the transmitters are different in format.

19. The method according to claim 12, wherein the communicating with the transmitter according to the primary communication path and the secondary communication path comprises:
if there are at least two identifiers of transmitters that perform communication by using the primary communication path, and a transmitter indicated by each identifier has a secondary communication path, controlling the primary communication path to be used to transmit downlink subframes of the transmitters indicated by the identifiers, wherein the downlink subframes of the transmitters are transmitted in a frequency division multiplexing manner; and
controlling the secondary communication path to be used to transmit an uplink subframe of a corresponding transmitter, wherein uplink subframes of the transmitters are transmitted in a spatial multiplexing manner, the uplink subframes of the transmitters exclusively occupy fully deployed bandwidth resources, and the uplink subframes and the downlink subframes of the transmitters are different in format.

20. The method according to claim 12, wherein the communicating with the transmitter according to the primary communication path and the secondary communication path comprises:
if there is one identifier of a transmitter that performs communication by using the primary communication path, and the transmitter indicated by the identifier has a corresponding secondary communication path, transmitting an uplink subframe and a downlink subframe of the transmitter in a spatial multiplexing manner, wherein the uplink subframe and the downlink subframe are different in format, and the transmitter occupies fully deployed bandwidth resources.

21. The method according to claim 12, wherein the communicating with the transmitter according to the primary communication path and the secondary communication path comprises:
if there are at least two identifiers of transmitters that perform communication by using the primary communication path, a quantity of secondary communication paths is greater than zero, and the quantity of secondary communication paths is less than a quantity of the identifiers, controlling the primary communication path to be used to transmit uplink subframes of the transmitters indicated by the identifiers, wherein the uplink subframes of the transmitters are transmitted in a frequency division multiplexing manner, and the transmitters comprise at least one first transmitter that does not have a secondary communication path and a second transmitter that has a secondary communication path;
controlling the primary communication path to be used to transmit a downlink subframe of each first transmitter, wherein the downlink subframe of each first transmitter is transmitted in a frequency division multiplexing manner, and uplink and downlink subframes of the first transmitter are transmitted in a time division multiplexing manner; and
controlling the secondary communication path to be used to transmit a downlink subframe of the second transmitter, wherein the downlink subframe of the second transmitter is transmitted in a spatial multiplexing manner, and an uplink subframe and the downlink subframe of the second transmitter are different in format.

22. The method according to claim 12, wherein the communicating with the transmitter according to the primary communication path and the secondary communication path comprises:
if there are at least two identifiers of transmitters that perform communication by using the primary communication path, a quantity of secondary communication paths is greater than zero, and the quantity of secondary communication paths is less than a quantity of the identifiers, controlling the primary communication path to be used to transmit downlink subframes of the transmitters indicated by the identifiers, wherein the downlink subframes of the transmitters are transmitted in a frequency division multiplexing manner, and the transmitters comprise at least one first transmitter that does not have a secondary communication path and a second transmitter that has a secondary communication path;
controlling the primary communication path to be used to transmit an uplink subframe of each first transmitter, wherein the uplink subframe of each first transmitter is transmitted in a frequency division multiplexing manner, and uplink and downlink subframes of the first transmitter are transmitted in a time division multiplexing manner; and
controlling the secondary communication path to be used to transmit an uplink subframe of the second transmitter, wherein the uplink subframe of the second transmitter is transmitted in a spatial multiplexing manner, and the uplink subframe and a downlink subframe of the second transmitter are different in format.

23. The method according to any one of claims 18 to 22, further comprising:
inserting a third SRS into the uplink and downlink subframes according to a preset insertion spacing, wherein
the inserting a third SRS into the uplink and downlink subframes comprises:
directly inserting the third SRS into a uplink subframe or wrapping the third SRS in a special subframe and inserting the special subframe into the uplink subframe; and
wrapping the third SRS in a special subframe and inserting the special subframe into the downlink subframe or at a switching location of the downlink subframe and the uplink subframe.

24. A computer storage medium, wherein
the computer storage medium stores a program, and when the program runs, steps in the method according to any one of claims 12 to 23 are executed.

25. A communications device, comprising the apparatus according to any one of claims 1 to 11.
